# EUROPEAN PATENT APPLICATION

(11) **EP 4 742 637 A2**
(43) Date of publication of application: **13.05.2026**
(21) Application number: 26166252.2
(22) Date of filing: 13.12.2024
(51) Int. Cl.: H04L 67/56

(54) **COMMUNICATION SYSTEM AND METHOD**

(30) Priority: 15.12.2023 DE 102023135321; 03.05.2024 WO PCT/EP2024/062291; 03.05.2024 WO PCT/EP2024/062295
(62) Divisional of application: 24826881.5
(71) Applicant: Marchl Metering GmbH, 93426 Roding (DE)
(72) Inventor: Marchl, Julian, 93426 Roding (DE)
(74) Representative: Kehl, Ascherl, Liebhoff & Ettmayr Patentanwälte Partnerschaft mbB

(57) **Abstract**

The present disclosure provides a communication system comprising at least one metering communication adapter, the metering communication adapter comprising a local meter interface configured to communicatively couple to a metering element, and to receive metering data from the metering element, and comprising a first communication interface configured to output the metering data received from the metering element.

## Description

### TECHNICAL FIELD

The disclosure relates to a communication system and a respective method.

### BACKGROUND

Although applicable to any type of metering system, the present disclosure will mainly be described in conjunction with electrical power metering devices.

Electrical power consumption of electrical installations in industrial or residential buildings may be measured or metered locally and may then be documented by employees of electricity providers.

Alternatively, the local power meters may transmit the measured power consumption to a central server electronically via a respective network connection. However, such electronic data transmission makes strong security measures mandatory to prevent data falsification during the transmission of the measured power consumption to the central server.

Such communication networks are consequently difficult to set up.

Accordingly, there is a need for an improved metering system.

### SUMMARY

The above-stated problem is solved by the features of the independent claims. It is understood, that independent claims of a claim category may be formed in analogy to the dependent claims of another claim category.

The present disclosure is based on the finding that local legal requirements may force electricity providers to install a secure communication device locally at every single power meter. For example, the German legal requirements require a so-called smart meter gateway, SMGw, to be installed at every single power meter (so-called mME, moderne Messeinrichtung) if the power meter readings are to be transmitted electronically to the electricity providers, e.g., for performing the invoicing. However, installing a single SMGw for every power meter increases the costs for the electricity providers. Such costs may not always be passed on to the customers.

German regulations regarding SMGws are, for example, provided in the standard document "Smart Meter Gateway PTB-A 50.8".

The BSI guidelines are specified for smart meter gateways (SMGw) as the central interface to the Internet. (BSI TR-03109[-1])

Further, mMEs send data telegrams with values for instantaneous power, energy consumption, etc. at periodic intervals via a serial interface. Two interfaces are specified for this purpose: The INFO-DSS, which is accessible to the end customer (consumer), and the MSB-DSS. The MSB-DSS also serves as a configuration interface for configuring the mME. This interface is not specified for all manufacturers, meaning that a separate communication adapter is required for each meter type in order to be able to communicate with the mME. The INFO-DSS, on the other hand, is standardized across manufacturers and is always implemented on the front of the device, for example.

Currently, only the MSB interface is used for billing by the metering point operator, as the data provided by the mME in this way is already encrypted. In order to be able to transmit the data to an SMGw or another radio base station, the data transmitted by the interface of the mME must be translated into an LMN-compatible protocol in a so-called communication adapter. This communication adapter is specified in [PTB-A 50.8 of December 2014] and thus enables the connection of an mME to a local LMN. This means, for example, that all mMEs in an apartment building can be connected wirelessly to an SMGw. However, due to the short range of an LMN-compatible radio standard (e.g. 10m for wM-Bus), the number of mMEs that can be connected to an SMGw is severely limited. This means that e.g., only all mMEs on one floor can be connected to one SMGw.

However, since the connection and installation costs of an SMGw (or a radio base station in general) are very high, it should be possible to connect as many mMEs as possible to an SMGw in order to keep the costs for operation and meter reading low. However, this is not possible with the current technology.

The present disclosure, therefore, provides the communication system that may serve as a kind of intermediary between multiple power meters and a single SMGw.

To this end, the communication system comprises at least one, especially multiple, metering communication adapters that communicate with a single concentrator unit.

Each one of the metering communication adapters comprises a local meter interface. The local meter interface serves for communicatively coupling the respective metering communication adapter to a metering element. The metering element may be any kind of metering element, for example, a power meter. Other meters, like water meters or heat meters, are also possible.

In addition, each one of the metering communication adapters comprises a first communication interface that communicatively couples the metering communication adapters to the concentrator unit that comprises a respective second communication interface.

The number of metering communication adapters supported by the communication system is only limited by the capacity of the concentrator unit and the SMGw, and the communication interface between the single metering communication adapters, and the concentrator unit.

During the operation of the communication system, the metering communication adapters each receive metering data from the respective metering element via the local meter interface. The metering communication adapters then transmit the received metering data via their first communication interface to the concentrator unit.

The metering communication adapters may serve as a so-called "measurement system component communication adapter" ("Messsystemkomponente Kommunikationsadapter" as described in chapter 6 of the standard document "Smart Meter Gateway PTB-A 50.8" of December 2014. The metering communication adapters may, consequently, be registered in respective smart meter gateways as communication adapters prior to transmitting the metering data.

A single concentrator unit may receive the metering data from a plurality of metering communication adapters. Via the local interface, the concentrator unit may then provide the acquired metering data from the plurality of metering communication adapters to a single receiver, e.g., an SMGw. In embodiments, the concentrator unit may be embedded in the SMGw. In such embodiments, the local interface may be an internal interface in the SMGw.

Consequently, instead of installing a plurality of smart meter gateways, the electricity provider may install a single smart meter gateway for a plurality of power meters and use the communication system according to the present disclosure for coupling multiple power meters to a single smart meter gateway.

The communication between the metering communication adapters, and the concentrator unit is transparent to the metering element, and the receiver of the metering data e.g., the SMGw. In such a case, the communication system may be seen as a kind of range extension and accumulator for a local communication between the metering element and the SMGw.

The communication system according to the present disclosure may be used to bridge large distances in the so called local metrological network, LMN, according to standard document "Smart Meter Gateway PTB-A 50.8" (also according to BSI TR03109-1 S. 49: Drahtlose Schnittstelle).

Further embodiments of the present disclosure are subject of the further dependent claims and of the following description, referring to the drawings.

It is a task of the present disclosure, as described above, to realize a communication adapter, herein called the communication system, especially by means of long-range radio in order to increase the radio range of mME and other meters and to drastically increase the number of mME per SMGw and thus reduce the costs of connection and installation to a minimum.

The aforementioned task is solved according to the disclosure by a communication adapter, also called the metering communication adapter herein, in particular for the smart connection of consumption meters by means of long-range radio, in particular LoRaWAN and mioty.

The invention comprises a communication adapter, in particular for the smart connection of consumption meters, also called metering units herein, by means of long-range radio, in particular LoRaWAN and mioty, wherein the range of the communication link between base station, also called concentrator unit herein, in particular with SMGw, and a consumption meter or smart meter (mME), also called metering unit herein, is increased by securely connecting a communication adapter for consumption meters, in particular according to PTB, by means of long-range radio with network protocol.

This solution is particularly advantageous in that the communication adapter or system according to the invention increases the radio range of mME and other meters and drastically increases the number of mME per SMGw and minimizes the costs of connection and installation.

According to an embodiment of the present disclosure, a communication adapter or system is provided, wherein it is separated into two physical parts, meter side, also called metering communication adapter, and SMGw (LMN-side) or base station side, also called concentrator unit, and the security of the network protocol is improved by using an outer transport encryption in addition to an inner end-to-end encryption or signature.

According to a further embodiment of the present disclosure, the communication adapter or system is provided, wherein only the register values and not the register identifiers of a data telegram can be encrypted or signed in the internal encryption or signature in order to generate a compact and easily analyzable data telegram with undiminished security.

Furthermore, according to one embodiment of the present disclosure, the communication adapter or system is provided, whereby the communication adapter fulfills the functionality of a sub-metering and control unit, in particular according to BSI regulations, so that in addition to consumption meters, any other device can also be connected.

In order to make a roll out as flexible as possible, it should also be possible to use the INFO-DSS for the communication adapter in order to provide a manufacturer-independent solution. However, the data must be transmitted in encrypted form, which is another innovation.

Further embodiments of the present disclosure are subject of the further dependent claims and of the following description, referring to the drawings.

In the following, the dependent claims referring directly or indirectly to claim 1 are described in more detail. For the avoidance of doubt, the features of the dependent claims relating to independent claim 1 can be combined in all variations with each other and the disclosure of the description is not limited to the claim dependencies as specified in the claim set. Further, the features of the dependent claims referring to independent claim 1 may be combined with any of the features of the other independent claims or the dependent claims relating to any one of the other independent claims. In a respective method, respective method steps may perform the function of the respective apparatus elements, and in a respective apparatus, respective apparatus elements may perform the respective method steps. It is understood, that especially the independent claims regarding the communication system, and the communication method that comprise the control communication adapter, may be combined with the features of the other independent and dependent claims. For example, a single encryption or a first and second encryption may be applied for any communication between the control communication adapter and the concentrator unit, as required.

In an embodiment, which can be combined with all other embodiments mentioned above or below, the local meter interface may comprise at least one of an optical interface, an infrared optical interface, a character-based optical interface, a reed-switch-based interface, a wired interface, and a wireless interface.

A metering element may comprise at least one of multiple possible types of interfaces.

The local meter interface may comprise any adequate type of optical, wired or wireless interface for receiving the metering data from the metering element. An optical interface may comprise any visible or non-visible light data transmission interface, like an infrared interface.

Another type of optical interface may comprise a character-based optical interface. Such an interface may comprise a camera that acquires an image of a character-based metering data indicator of the metering element. The character-based optical interface may comprise an OCR function to convert the metering data provided in the image into digital data to be transferred to the concentrator unit.

A reed-switch-based interface may comprise a reed-switch that is cyclically closed by a magnet that is provided by the metering element or an electrical contact which is cyclically closed by another mechanical provision.

Other types of interface for coupling the metering communication adapters to the metering elements may comprise wired or wireless data interfaces.

In embodiments, the local meter interface may be adapted to communicatively couple to a metering element via a so-called INFO-DSS interface or via a so-called MSB-DSS interface. The INFO-DSS interface, and the MSB-DSS interface in this context refer to protocol level interfaces. While they may use an infrared physical interface, any other physical interface may also be used.

The INFO-DSS interface is used by the metering element to periodically output a respective meter reading or respective metering data. The MSB-DSS interface may periodically output the same data, but may also be used to provide configuration data to the metering element.

While the INFO-DSS interface is a standardized interface (e.g., according to VDE FNN Lastenheft Basiszähler; and also in: VDE FNN Lastenheft EDL: Elektronische Haushaltszahler: Funktionale Merkmale und Protokolle), the physical design MSB-DSS interface is not standardized. Every manufacturer of metering elements may define a respective MSB-DSS interface (e.g., an Ethernet port, wire terminals, etc.). As indicated above, the local meter interface may be adapted to communicate via any of such vendor-defined MSB-DSS interfaces. As indicated, the MSB-DSS is not standardized. The local meter interface may consequently be adapted to operate or communicate with any respective proprietary MSB-DSS of different metering elements. The local meter interface may comprise any type of interface that may be required by the metering element, such an interface may, e.g., comprise a UART-based or Modbus-based interface, like a cable-based interface based on RJ10 or RJ12 connectors. However, other types of interfaces are also possible, depending on the respective metering element.

Especially in embodiments of the local meter interface that use the MSB-DSS to communicate with the metering element, but not limited to these, the metering communication adapter may be provided as a rail-mounted, also called DIN rail-mounted, device that may be integrated with the metering element in a respective electricity cabinet. This also allows to directly couple the metering communication adapter to the mains power and supply the metering communication adapter with electrical power via the mains power network. A metering communication adapter for communication via the MSB-DSS may comprise a power input interface. Such a power input interface may be configured to receive AC power from a mains network. The power input interface may comprise further power converters to generate a respective DC power for driving internal elements of the metering communication adapter. As alternative or in addition, such a power input interface may also receive DC power directly. In other elements, the metering communication adapter may be provided in a kind of add-on package for the metering element that may be mechanically coupled to the metering element such that the metering communication adapter and the metering element form a kind of unit. In embodiments, the metering communication adapter may also be provided internally to the respective metering element and may be internally coupled to the MSB-DSS of such a metering element. Any of these arrangements, further prevents the metering communication adapter from being removed easily.

In embodiments, the local meter interface may comprise multiple different physical interfaces. The local meter interface may e.g., comprise the main metering interface for reading or acquiring the metering data from a metering element. The local meter interface may comprise further interfaces, also called sub-metering interface, for acquiring data from other elements, also called sub-metering units.

The main metering interface may serve e.g., for acquiring the metering data from power meters, water meters, gas meters, and the like. The sub-metering interface may serve to acquire data from sub-ordinate metering elements, like power meters or heat meters in single apartments of a building.

In a further embodiment, which can be combined with all other embodiments mentioned above or below, the first communication interface and the second communication interface may comprise one of a wired data interface, a wireless data interface, a LoRaWAN interface, a mioty interface, a wireless sub-GHz interface, a WiFi interface, and a Bluetooth interface.

The first communication interface, and the second communication interface both serve to bridge larger distances between the multiple metering communication adapters and the final receiver of the metering data e.g., a smart meter gateway.

While any type of physical interface may be used for the first communication interface, and the second communication interface, in embodiments, a wireless sub-GHz interface, like a LoRaWAN or a mioty interface, may be used to provide a low power consumption interface that may bridge large distances with minimal installation effort. If required to bridge larger distances, a power amplifier may be provided in the first communication interface and the second communication interface.

In another further embodiment, which can be combined with all other embodiments mentioned above or below, at least one metering communication adapter may further comprise a first cryptographic module coupled between the local meter interface and the first communication interface, wherein the first cryptographic module may be configured to cryptographically encrypt the received metering data and provide the cryptographically encrypted metering data to the first communication interface for transmission to the concentrator unit.

The metering data provided by the metering element may already be encrypted. This may e.g., be the case for the above-mentioned MSB-DSS interface, while the INFO-DSS interface may (but necessarily needs to) provide the metering data in an unencrypted form.

Improved security of the data transmission may especially be required if an interface, like the MSB-DSS interface, is also used for configuring the metering element. Further, such an improved security of the data transmission may also be required according to local legislation. In Germany, such an improved security is e.g., required according to the standard documents "PTB-A 50.8 from December 2014 and the BSI TR-03109 series".

If an improved security is required for the data transmission, the metering communication adapters may be provided with the first cryptographic module. The first cryptographic module may receive the metering data from the local meter interface, cryptographically encrypt the received metering data, and provide the encrypted metering data back to the local meter interface or to the first communication interface for transmission to the concentrator unit.

It is understood, that the encryption may be performed such that a receiver of the encrypted metering data, that not necessarily needs to be the concentrator unit, may decrypt the metering data for further processing. The first cryptographic module may e.g., be configured to cryptographically encrypt the metering data such that only receiver that is provided with the metering data by the concentrator unit may decrypt the cryptographically encrypted metering data. The concentrator unit in such embodiments has no access to the cryptographically encrypted metering data.

The first cryptographic module may comprise any kind of adequate element, like an ASIC, an FPGA, a TPM (Trusted Platform Module) or a respective module in a processor or controller that is already present in the local meter interface.

In a further embodiment, which can be combined with all other embodiments mentioned above or below, the local meter interface may be configured to receive data packages comprising meta data and measurement data, and the first cryptographic module may be configured to at least one of perform a single encryption of the measurement data and the meta data, or perform a first encryption of the measurement data, and a second encryption of the encrypted measurement data and the meta data.

The term "meta data" may refer to any data that allows to identify the nature of the measurement data, the source of the measurement data, or any other information regarding the measurement data. The term "measurement data", in contrast, refers to the actual value measured by the metering element.

In embodiments, the measurement data in the data package may already be encrypted by the respective metering element. In such cases, no further encryption of the metering data is required. However, since the encryption keys of the metering element usually cannot be updated easily over a lifetime of several years, the first cryptographic module can decrypt the encrypted data package from the metering element and encrypt it with a new (and more secure) algorithm and key. The first cryptographic module can also encrypt configuration data for the metering element (e.g. for a TLS session of the MSB-DSS).

In other cases, the metering data may be provided in an unencrypted form. In such embodiments, the first cryptographic module may first encrypt the measurement data, and then encrypt the encrypted measurement data together with the meta data.

In embodiments with double encryption, the fully encrypted data package may be decrypted in the receiver to retrieve the meta data. At the same time, the content of the measurement data will still be encrypted. This allows analyzing the meta data and processing the data package accordingly, without allowing the measurement data to be accessed. The meta data may e.g., allow to identify the nature of the measurement data, and to store the measurement data accordingly. For example, the meta data may identify the measurement data as power measurement of a specific power metering element. The respectively encrypted measurement data may then be stored accordingly in encrypted form.

The data e.g., keys, for decrypting the measurement data may e.g., only be available to respectively authorized entities.

In a further embodiment, which can be combined with all other embodiments mentioned above or below, the first cryptographic module may be further configured to perform a key exchange based on a symmetrical encryption method for exchanging encryption keys for an asymmetrical encryption method, and to encrypt the received metering data with an asymmetrical encryption method based on the exchanged encryption keys.

Using a symmetric encryption method allows to quickly establish an encrypted communication path. Using such an encrypted communication path to perform a key exchange for an asymmetric encryption method then allows to securely exchange keys for the asymmetric encryption method.

It may be required to perform an asymmetric encryption of the received metering data either for internal security reasons, or for legislative reasons. For example, local legislation may require asymmetric encryption, at least for special applications, like a bi-directional data communication from and to the local meter interface. Also, the first cryptographic module may need to establish a different encryption session with the metering element where the encryption of the metering data first needs to be decrypted and then encrypted with a different key and/or algorithm. Similarly, the first cryptographic module can decrypt configuration updates or similar for the metering element received form the concentrator unit and encrypt it for transmission to the metering element with a different key and/or algorithm.

In another further embodiment, which can be combined with all other embodiments mentioned above or below, the first cryptographic module may further comprise a key memory that comprises a plurality of cryptographic keys, especially for a symmetric encryption method, with respective validity data, wherein the first cryptographic module may be configured to only use cryptographic keys with positively verified validity data.

The validity data may comprise e.g., a validity date for each one of the cryptographic keys. With a validity date being provided for every one of the cryptographic keys, only the cryptographic key with the validity date that is the next validity date compared to the current date, may be positively verified. With this method, cryptographic keys with a validity date that is in the past will automatically be negatively verified, while only one (the next) cryptographic key will be positively verified. On embodiments, a specific date range may also be provided for each one of the cryptographic keys.

In embodiments, other validity data may also be provided. Such other validity data may comprise identification data of possible communication partners. This allows providing a specific encryption key for every single one of a plurality of possible communication partners.

In embodiments, different variants of validity data may be combined. For example, an individual set of cryptographic keys with different validity dates may be provided for each one of a plurality of possible communication partners.

In another further embodiment, which can be combined with all other embodiments mentioned above or below, the concentrator unit may further comprise a second cryptographic module coupled between the second communication interface and the local interface, wherein the second cryptographic module may be configured to cryptographically decrypt the received metering data and provide the cryptographically decrypted metering data to the local interface.

As explained above, improved security of the data transmission of the metering data may be required in applications. This requirement may in embodiments apply to the transmission of data between the metering communication adapters and the concentrator unit.

In such embodiments, the concentrator unit may comprise a second cryptographic module. The explanations provided above for the first cryptographic module apply mutatis mutandis to the second cryptographic module. The second cryptographic module may comprise any kind of adequate element, like an ASIC, an FPGA, a TPM (Trusted Platform Module) or a respective module in a processor or controller that is already present in the local meter interface.

If the first cryptographic module cryptographically encrypts the metering data such that the second cryptographic module may decrypt the cryptographically encrypted metering data, a kind of secure tunnel may be established between the metering communication adapters and the concentrator unit. If the metering data is already cryptographically encrypted a first or inner encryption is present. The encryption performed by the first cryptographic module may be seen as a second or outer encryption in such embodiments.

In case of the first communication interface, and the second communication interface being provided as LoRaWAN interfaces, the encryption may be performed according to the LoRaWAN standard.

The first cryptographic module, and the second cryptographic module may perform any type of adequate encryption and decryption. Possible cryptographic algorithms comprise, but are not limited to, symmetrical cryptographic algorithms, like AES (Advanced Encryption Standard) algorithms, or asymmetric cryptographic algorithms, like a public/private key algorithm.

In a further embodiment, which can be combined with all other embodiments mentioned above or below, the second communication interface may be configured to receive data packages comprising measurement data encrypted with a first encryption, and meta data with the encrypted measurement data encrypted with a second encryption, wherein the second cryptographic module may be configured to at least one of perform a single decryption of the encrypted measurement data and the meta data, or perform a first decryption of the encrypted measurement data and the meta data, and a second decryption of the encrypted measurement data.

As explained above, the first cryptographic module may perform a single or double encryption. The second cryptographic module may be adapted to decrypt the single encryption, or the double encryption accordingly. The specific configuration of the second cryptographic module may depend on legislative requirements, or the requirements of the respective application.

Generally, the first encryption may e.g., comprise an AES-CMAC and -CBC authentication and encryption, or a ECC192-Signature in conformance with BSI TR-03116-3 from December 2022.

In another embodiment, which can be combined with all other embodiments mentioned above or below, the second cryptographic module may be further configured to perform a key exchange based on a symmetrical encryption method for exchanging encryption keys for an asymmetrical encryption method, and decrypt the received encrypted metering data with an asymmetrical encryption method based on the exchanged encryption keys.

In a further embodiment, which can be combined with all other embodiments mentioned above or below, the second cryptographic module may further comprise a key memory that comprises a plurality of cryptographic keys with respective validity data, wherein the second cryptographic module may be configured to only use cryptographic keys with positively verified validity data.

The explanations provided with regard to the key exchange, and the validity data with regard to the first cryptographic module apply mutatis mutandis also to the second cryptographic module.

In another further embodiment, which can be combined with all other embodiments mentioned above or below, the local meter interface, the first communication interface, the second communication interface, and the local interface may comprise bi-directional interfaces, wherein the local interface may be configured to receive configuration and control data and to provide the configuration and control data to the second communication interface, wherein the second communication interface may be configured to transmit the received configuration and control data to the first communication interface, wherein the first communication interface may be configured to transmit the received configuration and control data to the local meter interface, and wherein the local meter interface may be configured to output the received configuration and control data.

As explained above, different kinds of local meter interfaces are possible, while at least some of these local meter interfaces may allow bi-directional data communication between the metering communication adapter, and the metering element.

With such local meter interfaces, a data path from the concentrator unit to the single metering communication adapters may be provided by allowing the first communication interface, the second communication interface, the local meter interface, and the local interface to perform a bi-directional data communication.

This will allow e.g., a smart meter gateway coupled to the local interface to provide data e.g., the configuration or control data, to one of the metering elements or a group of metering elements.

The term configuration and control data in this regard refers to any type of data that may be provided from a sender e.g., the smart meter gateway, to the metering element. Such data may, but not necessarily needs to, refer to configuration of the metering element, or control of the metering element.

In embodiments with bidirectional data communication, the communication system according to the present disclosure may also be used to bridge large distances in the so-called home area network, HAN, according to standard document "PTB-A 50.8" or "BSI TR-03109-1". Such a HAN may be used to control consumers e.g., electrical power consumers, like charging units for electrical vehicles and heat-pumps, and to control generators, like solar, water or wind power generators. Such consumers or generators may also be called controllable local system, CLS.

In embodiments, the metering communication adapter may be embodied as a pure consumer or generator control communication adapter. Such a consumer or generator control adapter may be adapted to provide configuration and control data, e.g., to a controllable power consumer like the mentioned charging units. In such embodiments, the metering communication adapter, here also called control communication adapter, may be a kind of uni-directional adapter, and the communication may be mainly a communication from the concentrator unit to the control communication adapter and the consumer or generator. In embodiments, a bi-directional data communication is also possible, and the consumer or generator may provide consumption or generation data to the control communication adapter that may be provided to the concentrator unit and from there, e.g., to a mains operator that allows the mains operator to determine the configuration and control data for the respective consumer or generator.

In the case of the metering communication adapter being used as consumer or generator control communication adapter any type of local meter interface, in this embodiments also called control interface, may be provided, e.g., a wireless, optical or wired interface. In embodiments, the control interface interface may be an Ethernet-based interface, especially a EEBUS interface. In addition, the control interface may be provided as a switching output e.g., implemented by respective relays. Such relays may be used to control power consumers or generators that do not comprise a digital control interface. In such embodiments, the control communication adapter may comprise a control unit, e.g., a microcontroller as explained herein, that may control the relays based on received configuration and control data.

In embodiments without an SMGw but with a server being coupled to the concentrator unit via the third communication interface, the third communication interface instead of the local interface, and the second communication interface, and the first communication interface may be used for transmitting the configuration and control data.

Generally, in any case of a unidirectional communication or a bi-directional communication disclosed herein, the communication may comprise a bi-directional data exchange if, e.g., required by the respective communication protocol, for example, for providing acknowledgment messages or the like.

In a further embodiment, which can be combined with all other embodiments mentioned above or below, the second cryptographic module may be configured to cryptographically encode the configuration and control data, and to provide the cryptographically encoded configuration and control data to the second communication interface, and the second communication interface may be configured to transmit the cryptographically encoded configuration and control data to the first communication interface.

As explained above, for the transmission of the metering data, the configuration and control data may also be transmitted cryptographically encrypted.

To this end, the second cryptographic module in the concentrator unit may be adapted to cryptographically encrypt the configuration and control data prior to transmission of the configuration and control data to the respective metering communication adapter.

In an embodiment, which can be combined with all other embodiments mentioned above or below, the first cryptographic module may be configured to cryptographically decode the received configuration and control data and to provide the cryptographically decoded configuration and control data to the local meter interface, and the local meter interface may be configured to output the cryptographically decoded configuration and control data.

In embodiments, the cryptographically encrypted configuration and control data may be decrypted by the metering element. However, in embodiments, the metering communication adapters may decrypt the cryptographically encrypted configuration and control data, and provide the originally, un-encrypted configuration and control data to the metering element. In other embodiments, the encrypted configuration and control data may be decrypted by the first cryptographic module of the metering element and encrypted with a different key and/or algorithm for transmission to the metering and / or control element.

In another further embodiment, which can be combined with all other embodiments mentioned above or below, the at least one metering communication adapter may comprise a first module comprising the local meter interface and a first coupling interface coupled to the local meter interface, and a second module comprising a second coupling interface coupled to the first communication interface, wherein the first coupling interface may be configured to couple to the second coupling interface.

The metering communication adapters may be provided as modular units. Such metering communication adapters may comprise the first module that may be individually provided for specific types of metering elements. The second module, in contrast, may be a general module that may be used in all metering communication adapters as platform or base for accommodating the different possible first modules.

In the first module the local meter interface may be, directly or indirectly, coupled to the first coupling interface. The first coupling interface may be an electrical interface implemented with a respective connector. Of course, further mechanical means for fixing the first module to the second module may be provided. The first coupling interface may also serve to receive electrical supply power to power any of the elements provided on the first module.

The second module, as the base or carrier of the first module, comprises the second coupling interface. The second coupling interface may form the counterpart for the first coupling interface and provide a respective, direct or indirect, electrical connection from the second coupling interface to the first communication interface.

The term direct connection in this regard refers to the connection comprising no further elements than the respective electrical traces or connections. An indirect coupling refers to any other element being provided between the two endpoints of the connection.

In an embodiment, the first module may e.g., only comprise a respective interfacing element of the local meter interface, like an IR receiver, that may be directly coupled to the first coupling interface. Any other element required to drive the interfacing element and acquire data with the interfacing element may be provided on the second module. In other embodiments, at least a data decoding element may be provided on the first module with the interfacing element, and the data decoding element may decode the raw data received by the interfacing element, and provide a respective digital data package or stream to the second module.

In a further embodiment, which can be combined with all other embodiments mentioned above or below, the first cryptographic module may be arranged between the local meter interface, and the first coupling interface, or between the second coupling interface, and the first communication interface.

In embodiments, the first cryptographic module may be provided on the first module in order to cryptographically encrypt the metering data as soon as possible in the signal chain. In other embodiments, the first cryptographic module may be provided on the second module in order to reduce the complexity of the first module.

In an embodiment, which can be combined with all other embodiments mentioned above or below, the local interface may comprise a wired communication interface, especially an Ethernet-based communication interface.

The concentrator unit may be provided local to the receiver of the metering data. Especially in such embodiments, the local interface of the concentrator unit may comprise a wired interface, like an Ethernet-based communication interface. Such a wired interface allows for a simple connection of the concentrator unit to the receiving unit that does not leak any data, like a wireless interface.

The local interface may also comprise a wireless interface, especially a cellular network wireless interface, and the local interface may be configured to output the metering data to a remote receiver.

In further embodiments, the local interface may comprise a wireless interface. The wireless interface may serve for communication with the SMGw, or for transmitting the metering data to other receivers than the above-mentioned SMGw.

The wireless interface may e.g., comprise a GSM-based interface, a UMTS-based interface, an LTE-based interface, a 5G-based interface, or any other cellular communication standard-based interface.

This allows transmitting the metering data to any receiver as required by the respective application.

It is understood, that in embodiments, the local interface may comprise multiple different types of interfaces, like the wired and the wireless interface, or multiple wired, and multiple wireless interfaces.

In an embodiment, which can be combined with all other embodiments mentioned above or below, the local interface may be configured to output the metering data to a local smart meter gateway.

Smart meter gateways, especially according to standard document "PTB-A 50.8" and "BSI TR-03109", are required to communicate according to a predefined standard. The predefined standard as shown in chapter 3.3.5 of the standard document "PTB-A 50.8", requires the SMGw to communicate via an EIA/RS 485 bidirectional physical interface, and/or via a wireless MBUS Mode (C), T unidirectional physical interface.

Therefore, the local interface of the concentrator unit may be adapted to support all required functions of the respective communication standard.

The metering communication adapters and the concentrator unit described herein may be implemented by any adequate combination of processors, interface controllers, sensors, actors and the like.

A respective processor may perform control of the single elements, and may comprise or integrate at least some of the elements. For example, such a processor may be provided as a microcontroller that comprises a respective processing core that is coupled to a respective local meter interface e.g., an IR sensor, and a respective first communication interface. The IR sensor may be directly coupled to such a microcontroller, and the microcontroller may decode the signals received via the IR sensor. A respective LoRaWAN interface may be provided as first communication interface. Such a LoRaWAN interface may be coupled to the microcontroller e.g., via a SPI-Bus interface. The microcontroller may also comprise a TPM or any other adequate module that may perform the function of the first cryptographic module.

Generally, a respective processor may comprise or may be provided in or as part of at least one of a dedicated processing element e.g., a processing unit, a microcontroller, a field programmable gate array, FPGA, a complex programmable logic device, CPLD, an application specific integrated circuit, ASIC, or the like. A respective program or configuration may be provided to implement the required functionality. The processor may at least in part also be provided as a non-transitory computer program product comprising computer readable instructions that may be executed by a processing element. In a further embodiment, the processor may be provided as an addition or additional function or method to the firmware or operating system of a processing element that is already present in the respective application as respective computer readable instructions. Such computer readable instructions may be stored in a memory that is coupled to or integrated into the processing element. The processing element may load the computer readable instructions from the memory and execute them.

In addition, it is understood, that any required supporting or additional hardware may be provided like e.g., a power supply circuitry and clock generation circuitry.

Generally, any computer program or computer program product disclosed herein is to be understood as a non-transitory computer program product.

The above-provided explanations regarding the processor also apply mutatis mutandis to the concentrator unit.

In another further embodiment, which can be combined with all other embodiments mentioned above or below, the concentrator unit may further comprise a third communication interface that is configured to communicatively couple the concentrator unit to an external communication partner, wherein the concentrator unit may be further configured to output the received metering data via the third communication interface. In embodiments, the concentrator unit may comprise the third communication interface without the first communication interface.

The third communication interface may comprise any kind of communication interface, like a wired communication interface or a wireless communication interface. The third communication interface may e.g., comprise an Ethernet interface, or a WiFi interface.

The communication to the external communication partner may be performed directly or indirectly via any type of data network. In embodiments, the external communication partner may e.g., comprise a server in a data center or a cloud server or service. Such a server, or service may comprise the server or a mains power provider that receives the metering data, e.g., for billing purpose. Such a server, especially without the first communication interface in the metering communication adapter may be used, e.g., in jurisdictions that do not require the security measures provided via the first communication interface, and the concentrator unit.

The server may further, as alternative or in addition, comprise a control server that may provide configuration and control data or that may provide device control data for transmission to a power consumer.

In embodiments, the data transmitted via the third communication interface may be encrypted the same way as explained for the data transmitted via the local interface. Such data may be encrypted with a single encryption or with a first and a second encryption, as explained herein.

The third communication interface may also comprise an interface to a home area network, HAN, and couple the concentrator unit to a respective local communication partner, which may e.g., comprise further metering devices.

In a further embodiment, which can be combined with all other embodiments mentioned above or below, the concentrator unit may be further configured to deactivate the third communication interface while the local interface is active, and deactivate the local interface while the third communication interface is active.

By activating only the local interface or the third communication interface at the same time, data security in the communication system may be improved. Especially with the local interface being exclusively coupled to a SMG, the entry points for an attack on the concentrator unit are reduced if the third communication interface is deactivated.

A respective controller (dedicated or as function in any other control unit of the concentrator unit) may be provided to activate and deactivate the local interface, and the third communication interface, respectively.

The third communication interface, and the local interface may in embodiments during operation of the communication system be operated alternatively. For example, the third communication interface may periodically be activated to contact an external server to provide metering data to the external server or to retrieve data for the communication system from the server. While the third communication interface is not communicating with any external communication partner, the local interface may be activated to communicate e.g., with a SMGw.

In another further embodiment, which can be combined with all other embodiments mentioned above or below, the concentrator unit may further comprise a communication application server, especially a LoRaWAN network and application server, that is coupled to the second communication interface, wherein the communication application server may be configured to authenticate the at least one metering communication adapter, and manage the communication with the at least one metering communication adapter.

The wireless communication network that is established by the second communication interface with the at least one metering communication adapter may require management and authentication functions to operate properly, like in the case of a LoRaWAN network, that requires a network and application server. Instead of contacting or providing an external network and application server, the concentrator unit may comprise the communication application server. Such a communication application server may perform all the functions an external server would otherwise perform.

The expression "authenticate the at least one metering communication adapter" refers to the communication application server identifying the respective at least one metering communication adapter that is communicating with the concentrator unit. The communication application server may e.g., compare IDs or keys provided by the at least one metering communication adapter with an internal database. The expression "manage the communication with the at least one metering communication adapter" refers to handling the incoming data and acknowledging reception of incoming data. Managing the communication may also comprise dropping any data packets that are received from not-authenticated communication partners.

In a further embodiment, which can be combined with all other embodiments mentioned above or below, the communication application server may be further coupled to the third communication interface. The communication application server may be further configured to forward received metering data to the third communication interface.

In a further embodiment, which can be combined with all other embodiments mentioned above or below, the third communication interface may comprise a communication controller that is configured to receive the metering data and at least one of add meta data to the metering data, anonymize the metering data, decrypt the metering data, and decrypt the metering data.

The communication application server may provide the received metering data to the communication controller. The communication controller may perform or manage the communication via the third communication interface according to any adequate communication protocol. Possible communication protocols include, but are not limited to, MQTT(S) (Message Queuing Telemetry Transport, with or without encryption), HTTP (hyper-text transfer protocol, with or without encryption), FTP (file transfer protocol, with our without encryption), EST (Enrollment over Secure Transport), REST, SOAP, PKI (public key infrastructure related communication).

Adding meta data may refer to, but is not limited to, adding device IDs, or additional information, like a signal-to-noise ratio for the data packet received via the second communication interface and containing the metering data.

Anonymizing the metering data may refer to removing any ID or other data that may serve to identify the at least one metering communication adapter or metering element that is the source of the metering data.

In another further embodiment, which can be combined with all other embodiments mentioned above or below, the communication controller may be further configured to receive a data packet via the third communication interface, and at least one of decrypt the data packet, encrypt the data packet, identify a control command in the data packet, process a control command in the data packet, and forward the data packet via at least one of the second communication interface, and the local interface.

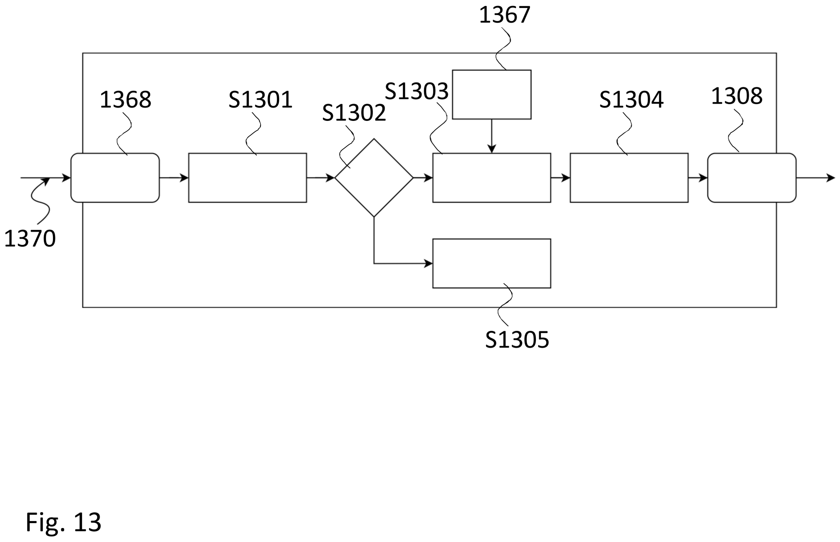

The third communication interface with the communication controller may perform the same downlink communication as described for the local interface e.g., with regard to figure 13 below. Any explanations provided with regard to the local interface apply mutatis mutandis to the third communication interface.

In a further embodiment, which can be combined with all other embodiments mentioned above or below, in an initialization mode the at least one metering communication adapter may be configured to at least one of perform a registration procedure with the concentrator unit, automatically acquire an identification from the metering element, receive an identification of the metering element from the concentrator unit, and output the identification of the metering element and an internal identification of the at least one metering communication adapter.

In embodiments time synchronization of the metering communication adapters and the concentrator unit and any other devices in the communication system may be required. Usually, timestamping takes place in the SMGw, not in the meter or the metering communication adapter. Further, the SMGw usually expects a measured value from the meter, for example, every 15 minutes.

If several metering elements are connected to a single SMGw through respective metering communication adapters and a concentrator unit, the SMGw usually will use an acceptance time window of, for example, 4 seconds around the expected arrival time for the next measurement value. If the first measurement value arrives at, for instance, 12:17:47 (hh:mm:ss), the next measured value is expected by the SMGw to be received between 12:32:45 and 12:32:49, and the third measurement value is expected to be received between 12:47:45 and 12:47:49, and so forth. The same applies analogously to other metering elements. To ensure that this time window can be met precisely over multiple years, a RTC (Real-Time Clock) of the respective metering communication adapters may be periodically synchronized with that of the SMGw, for example every 24 hours.

However, the BSI TR-03109-1 and TR-03116-3 specify that symmetric (i.e., AES) encryption can only be used if the metering data is transmitted unidirectionally to the SMGw. Therefore, the concentrator unit may periodically send a time synchronization to the metering communication adapters, where GPS or NTP can serve as the time source, and this data packet may be encrypted only with the outer layer of encryption, i.e., the second cryptographic module. The same approach can be applied analogously for configuring the metering communication adapters. In this manner, for example, the meter ID of the connected metering element can also be introduced to the end device via the outer transport encryption.

Additionally, the timing of the transmission of the metering data to the SMGw or the concentrator unit (depending on the mode) may be determined by a management server. Each (newly) connected metering communication adapter may thus be assigned its own time slot for communication with the concentrator unit or the SMGw, which overlaps not at all or only minimally with those of other end devices. This prevents overlaps and the loss of data packets. Instead of with the SMGw the same scheme may be applied if no SMGw is present but a sever is contacted, as described above.

It may be required to pair a newly installed metering communication adapter with a respective metering element. To this end, a code, e.g., a QR code or any other type of optical or electrically extractable code, like a code in an RFID or NFC tag, may be provided on the metering communication adapter. During installation, the user may scan the respective code with a respective device, e.g., a smartphone with a respective application, and input further input the ID or meter number of the metering element. The respective application may forward this data to a respective server, e.g., the server of a mains power network operator. That server may then confirm the registration via the SMGw and the concentrator unit to the metering communication adapter. The metering communication adapter may then use the registered metering element number of code for further data transmissions.

### BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:
Figure 1 shows a block diagram of an embodiment of a communication system according to the present disclosure;
Figure 2 shows a block diagram of an embodiment of a metering communication adapter according to the present disclosure;
Figure 3 shows a block diagram of an embodiment of a concentrator unit according to the present disclosure;
Figure 4 shows a block diagram of another embodiment of a metering communication adapter according to the present disclosure;
Figure 5 shows a block diagram of an embodiment of a second module for use in a metering communication adapter according to the present disclosure;
Figure 6 shows a block diagram of an embodiment of a first module for use in a metering communication adapter according to the present disclosure;
Figure 7 shows a block diagram of another embodiment of a metering communication adapter according to the present disclosure;
Figure 8 shows a block diagram of another embodiment of a metering communication adapter according to the present disclosure;
Figure 9 shows a block diagram of another embodiment of a second module for use in a metering communication adapter according to the present disclosure;
Figure 10 shows a block diagram of another embodiment of a second module for use in a metering communication adapter according to the present disclosure;
Figure 11 shows a block diagram of another embodiment of a concentrator unit according to the present disclosure;
Figure 12 shows a flow diagram of an embodiment of a method according to the present disclosure;
Figure 13 shows a flow diagram of another embodiment of a method according to the present disclosure;
Figure 14 shows a flow diagram of another embodiment of a method according to the present disclosure;
Figure 15 shows a block diagram of an embodiment of possible data packets for use with the subject of the present disclosure;
Figure 16 shows a flow diagram of another embodiment of a method according to the present disclosure;
Figure 17 shows a block diagram of another embodiment of a metering communication adapter according to the present disclosure;
Figure 18 shows a block diagram of another embodiment of a concentrator unit according to the present disclosure;
Figure 19 shows a block diagram of another embodiment of a concentrator unit according to the present disclosure;
Figure 20 shows a block diagram of a further embodiment of a concentrator unit according to the present disclosure;
Figure 21 shows a block diagram of another embodiment of a concentrator unit according to the present disclosure;
Figure 22 shows a block diagram of a further embodiment of a concentrator unit according to the present disclosure;
Figure 23 shows a block diagram of another embodiment of a concentrator unit according to the present disclosure;
Figure 24 shows a block diagram of another embodiment of a communication system according to the present disclosure;
Figure 25 shows a block diagram of another embodiment of a communication system according to the present disclosure; and
Figure 26 shows a block diagram of another embodiment of a metering communication adapter according to the present disclosure.

In the figures like reference signs denote like elements unless stated otherwise.

### DETAILED DESCRIPTION OF THE DRAWINGS

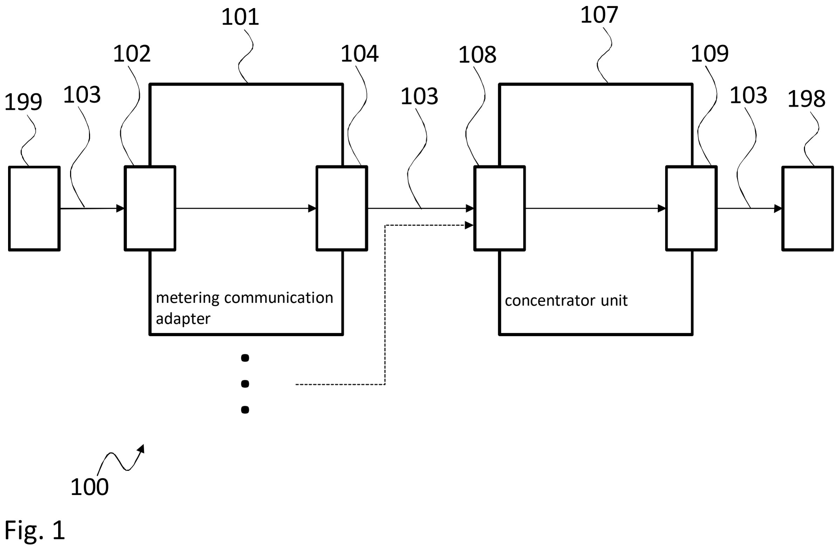

Figure 1 shows a block diagram of a communication system 100. The communication system 100 comprises a metering communication adapter 101, while more metering communication adapters are hinted at by three dots. The metering communication adapter 101 comprises a local meter interface 102 for communicatively coupling to a metering element 199, and receiving metering data 103 from the metering element 199. The metering communication adapter 101 further comprises a first communication interface 104 for outputting the metering data 103. The communication system 100 further comprises a concentrator unit 107 comprising a second communication interface 108 for receiving the metering data 103 output by the metering communication adapter 101. Further, the concentrator unit 107 comprises a local interface 109 for outputting the received metering data 103 e.g., to a smart meter gateway 198. The explanations provided herein for any embodiment of the communication system apply mutatis mutandis to communication system 100.

In order to allow to couple the metering communication adapter 101 to a plurality of different metering elements 199, the local meter interface 102 may comprise at least one of an optical interface, especially an infrared optical interface, or a character-based optical interface, a reed-switch-based interface, a wired interface, and a wireless interface.

Further, in order to allow adapting the communication system 100 to different application requirements the first communication interface 104 and the second communication interface 108 may comprise at least one of a wired data interface, a wireless data interface, especially a wireless sub-GHz interface, more especially a LoRaWAN interface, or a mioty interface, a WiFi interface, and a Bluetooth interface.

The local interface 109 may comprise any type of interface adequate for communicating with a receiving device 198 e.g., a smart meter gateway. Such an interface may comprise any type of interface as described above for the local meter interface 102, the first communication interface 104, and the second communication interface 108.

It is understood, that each one of the local meter interface 102, the first communication interface 104, the second communication interface 108, and the local interface 109 may comprise more than a single physical interface, and may support any protocol that is required by a respective application.

In embodiments, the local meter interface 102, the first communication interface 104, the second communication interface 108, and the local interface 109 may comprise bi-directional interfaces. The local interface 109 may receive configuration and control data and provide the configuration and control data to the second communication interface 108. The second communication interface 108 may transmit the received configuration and control data to the first communication interface 104. The first communication interface 104 may transmit the received configuration and control data to the local meter interface 102. The local meter interface 102 may output the received configuration and control data e.g., to a metering element 199, or may internally process the configuration and control data especially, if the configuration and control data is destined to the metering communication adapter 101.

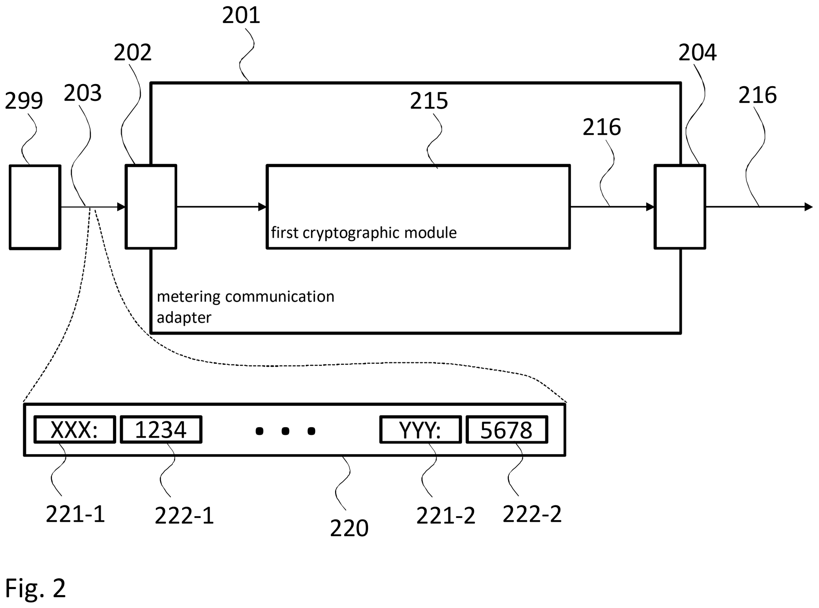

Figure 2 shows a block diagram of a metering communication adapter 201 that may be used e.g., with a communication system 100 as shown in figure 1. The metering communication adapter 201 comprises a local meter interface 202, and a first communication interface 204, as already described with regard to figure 1. The explanations provided herein for any embodiment of the metering communication adapter apply mutatis mutandis to metering communication adapter 201.

The metering communication adapter 201 further comprises a first cryptographic module 215 coupled between the local meter interface 202 and the first communication interface 204. The first cryptographic module 215 cryptographically encrypts the received metering data 203 and provides the cryptographically encrypted metering data 216 to the first communication interface 204 for transmission to the concentrator unit. In embodiments, although not explicitly shown, a microcontroller or processor may be provided and coupled to the local meter interface 202, and the first communication interface 204. The first cryptographic module 215 may be provided as part of or in such a microcontroller or processor, or may be coupled to such a microcontroller or processor. Further, any supporting elements, like secure key memories may be provided.

In embodiments, encryption of the configuration and control data may be performed with the first, and second cryptographic modules described herein, or with additional cryptographic modules.

In figure 2, the local meter interface 202 receives a data package 220 comprising meta data 221-1, 221-2 and measurement data 222-1, 222-2. The data package 220 comprises multiple sets of meta data 221-1, 221-2 with respective measurement data 222-1, 222-2, wherein one to multiple such sets may be provided in a single data package 220.

The first cryptographic module 215 may perform a single encryption of the measurement data 222-1, 222-2 and the meta data 221-1, 221-2. This will result in a fully encrypted data package 220. Alternatively, the first cryptographic module 215 may perform encryption only of the measurement data 222-1, 222-2 and leave the meta data 221-1, 221-2 unencrypted. This will allow to evaluate the meta data 221-1, 221-2 in the receiver, without a decryption step, and without publishing the actual measurement data 222-1, 222-2.

In a further alternative, the first cryptographic module 215 may perform a first encryption of the measurement data 222-1, 222-2, and a second encryption of the encrypted measurement data 222-1, 222-2 and the meta data 221-1, 221-2. This provides an additional layer of security during data transmission for the meta data 221-1, 221-2, and still allows evaluating the meta data 221-1, 221-2 in the receiver after a first decryption step without publishing the actual measurement data 222-1, 222-2. Of course, different encryption keys and/or encryption methods may be used for the first encryption and the second encryption.

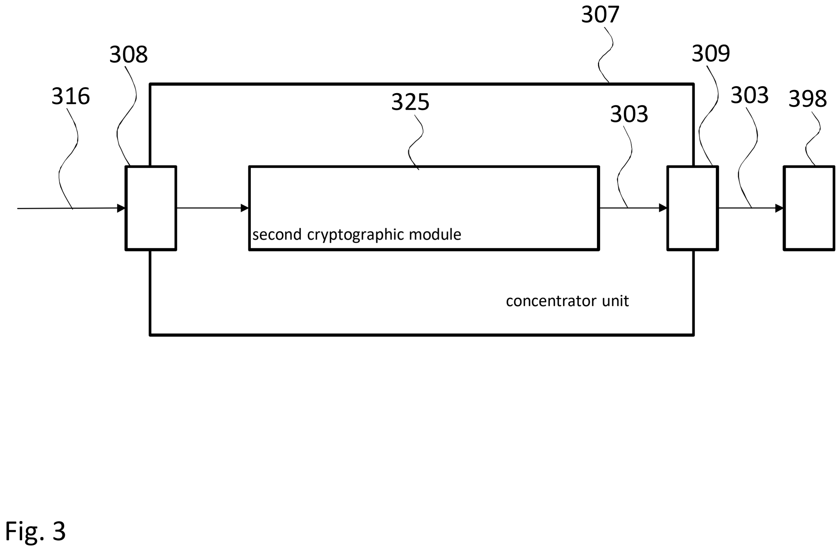

Figure 3 shows a block diagram of a concentrator unit 307. The concentrator unit 307 comprises a second communication interface 308 and a local interface 309 as already explained with regard to figure 1. The explanations provided herein for any embodiment of the concentrator unit adapter apply mutatis mutandis to concentrator unit 307.

Further, the concentrator unit 307 comprises a second cryptographic module 325 that is coupled between the second communication interface 308 and the local interface 309. As in the metering communication adapter 201, in embodiments, although not explicitly shown, a microcontroller or processor may be provided and coupled to the second communication interface 308, and the local interface 309. The second cryptographic module 325 may be provided as part of or in such a microcontroller or processor, or may be coupled to such a microcontroller or processor. Further, any supporting elements, like secure key memories may be provided.

The second cryptographic module 325 may cryptographically decrypt the received metering data and provide the cryptographically decrypted metering data 303 to the local interface 309.

The second communication interface 308 may receive data packages comprising measurement data encrypted with a first encryption, and meta data that may optionally be encrypted with a second encryption together with the encrypted measurement data.

The second cryptographic module 325 may perform a single decryption of the encrypted measurement data and the meta data in order to at least access the meta data. Further, the second cryptographic module 325 may perform an optional first decryption of the encrypted measurement data and the meta data, and a second decryption of the encrypted measurement data in order to also access the measurement data.

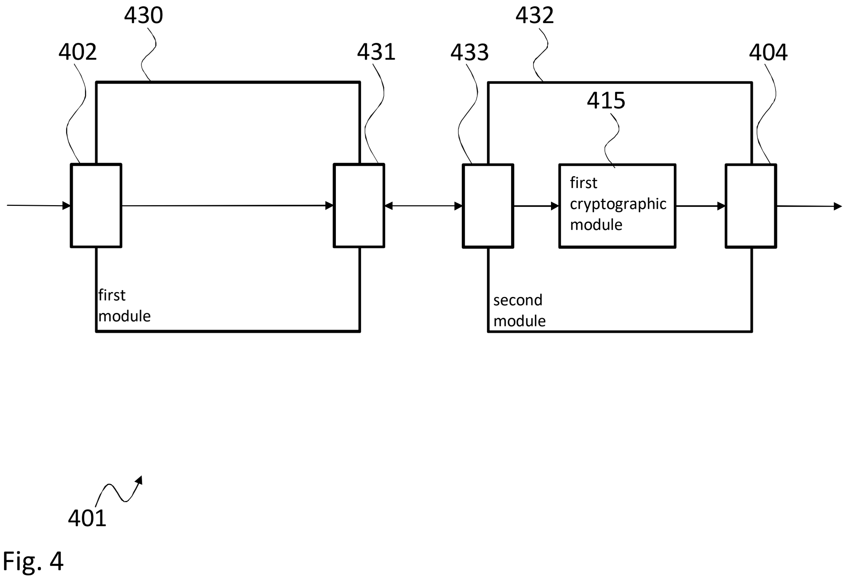

Figure 4 shows a block diagram of another metering communication adapter 401. The metering communication adapter 401 is split in two parts, and comprises a first module 430 that comprises the local meter interface 402 and a first coupling interface 431 coupled to the local meter interface 402. The metering communication adapter 401 further comprises a second module 432 that comprises a second coupling interface 433 coupled to the first communication interface 404.

The first coupling interface 431 may electrically and, optionally, mechanically couple to the second coupling interface 433 for data transmission and fixation of the first module 430 to the second module 432.

In the metering communication adapter 401, the first cryptographic module 415 is exemplarily arranged between the second coupling interface 433, and the first communication interface 404. Alternatively, the first cryptographic module 415 may be installed between the local meter interface 402, and the first coupling interface 431. The explanations provided herein for other embodiments of the first cryptographic module apply mutatis mutandis to first cryptographic module 415.

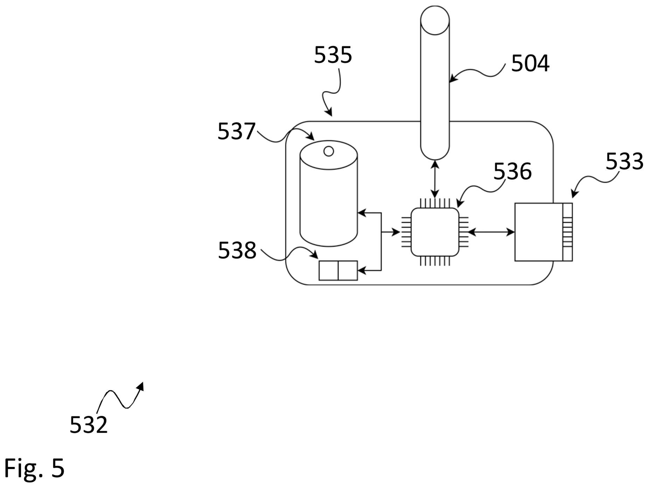

Figure 5 shows a block diagram of an embodiment of a second module 532, also called basic module or interface board, for use in a metering communication adapter.

In order to be able to connect any type of metering element, as many interfaces as possible must be able to be recorded by a reading terminal device e.g., the metering communication adapter as discussed herein. In order to keep product costs and material consumption low, a modular design may be used for such metering communication adapters, as described herein with regard to the first module (also called interface board), and the second module (also called basic module) e.g., with regard to figure 4.

The basic module, shown in Fig. 5, comprises a circuit board 535 with several components: A central microcontroller 536 or SoC may comprise, among other things, a secure memory (secure key management) and a LoRaWAN transceiver (this can also be connected to the microcontroller 536 as a separate chip). The microcontroller 536 is powered by a power source 537, like a supply battery or rechargeable battery. In addition, or as alternative, the board 535 may be operated with an external power supply via external power input 538. The microcontroller 536 or a dedicated transceiver (not shown) may be connected to an antenna e.g., of the first communication interface 504.

The microcontroller 536 provides important interfaces (e.g. UART, digital and analog input) as well as the power supply for the interface board via second coupling interface 533 for the interface board.

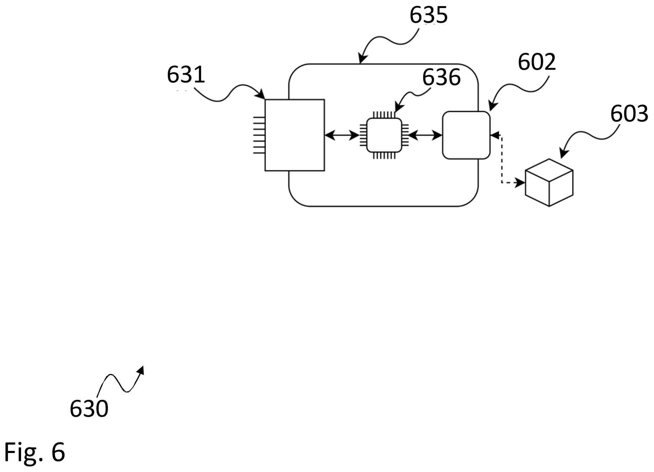

Figure 6 shows a block diagram of a first module 630, also called interface board, for use in a metering communication adapter according to the present disclosure.

The interface board 630 is shown in Fig. 6 comprises of a circuit board 635 with first coupling interface 631 as counterpart to the second coupling interface 533 of the base module 532. The board may comprise circuits for signal processing e.g. a microcontroller 636 or SoC or DSP, but may also forward an unprocessed signal to the base module. A sensor 602, e.g. an INFO/MSB-DSS IR sensor, a pulse input, a reed switch, a CCD chip/CMOS camera etc. determines a digital signal from a variable to be measured e.g., the metering data 603 (analog: INFO/MSB-DSS on the counter side, pulse output, rotating magnet, counter reading) and transmits this to the signal processing 636 or directly to the base module e.g., via first coupling interface 631.

The main module or first module 630 is coupled to the desired interface board and the corresponding housings (separately or together) are firmly connected to each other. The main board or first module 630 may then be programmed with the appropriate software (e.g. INFO-DSS evaluation or pulse summation) to connect the desired metering element (mME with INFO-DSS or MSB-DSS, gas meter with rotating magnet, etc.) to the base station (also called concentrator unit herein) or transmit metering data from the respective metering element to the concentrator unit.

The modular terminal device i.e., the metering communication adapter, assembled as discussed in figures 5 and 6, therefore, functions as the "input-side part" of the "measuring system component communication adapter" from Chapter 6 of PTB Guideline PTB-A 50.8 from December 2014. The base station, therefore, represents the "second part" of this communication adapter, i.e. the "interface to the LMN". This communication adapter is thus physically separated into two parts that are securely connected to each other via e.g., a LoRaWAN with internal and external encryption, as explained in more detail below. In this way, the security chain required by the BSI is maintained.

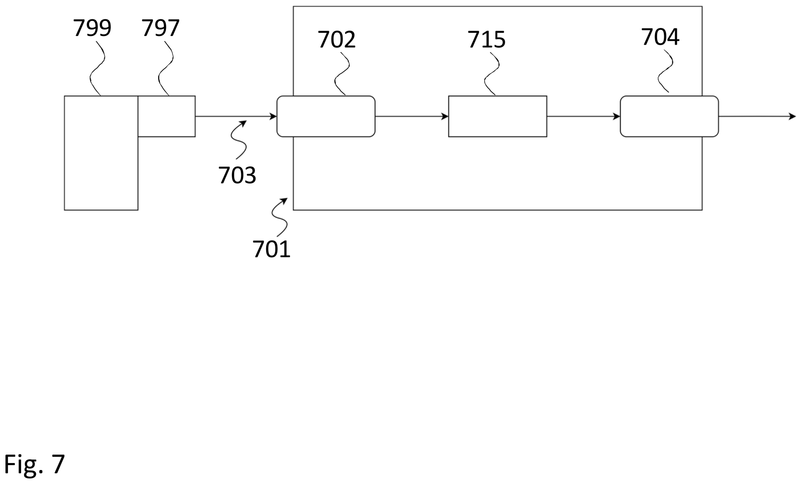

Figure 7 shows a block diagram of another metering communication adapter 701, also called terminal device, for connecting to smart meters (digital electricity meter / mME) according to the present disclosure, and also illustrates the data flow and system structure for such a terminal device attached to a mME.

The terminal device 701 is attached to an interface (e.g. INFO- / MSB-DSS) 797 of a modern metering device or mME 799. The mME sends data telegrams 703 at periodic intervals with information on the meter reading, the phase voltages, etc. Such a telegram may contain, for example, the section {"1.8.0": 1257, "2.8.0": 960}, wherein "1.8.0", "2.8.0" may represent meta data, like a register designation, and 1257, 960 may represent actual readings. The sent telegram may be received by the IR receiver 702, also called the local meter interface, of the interface board and is transferred to the encryption module 715. The encrypted telegram is then sent to the base station, also called the concentrator unit, via LoRaWAN using a sub-GHz radio module or interface 704. It should be noted that the terminal device 701, may transmit several meter data sets in a combined radio telegram or several separate radio telegrams.

The terminal device can also be attached to the MSB-DSS. In this case, the internal encryption by encryption module 715 can be deactivated, as the user data is already signed on the meter side.

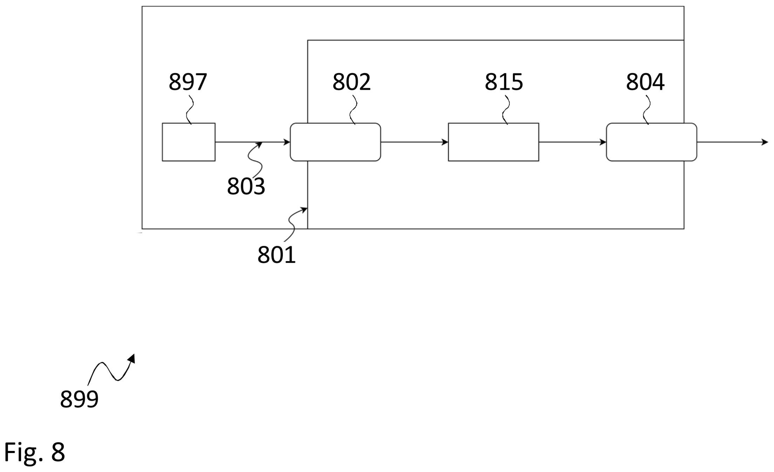

Figure 8 shows a block diagram of a metering communication adapter 801, also called terminal device 801, according to the present disclosure. The terminal device 801 of figure 8 is integrated directly into a mME.

As described with regard to figure 7, the terminal device 801 is installed here in a modern metering device. Via an interface 897, the mME transmits data telegrams 803 with information on the meter reading, phase voltages, etc. at periodic intervals. Such a telegram may contain, for example, the section {"1.8.0": 1257, "2.8.0": 960}. The sent telegram is received by the interface 802 of the interface board and transferred to the encryption module 815. The encrypted telegram is then sent to the base station via LoRaWAN using a sub-GHz radio module 804, or first communication interface 804. The explanations, provided with regard to metering communication adapter 701 apply mutatis mutandis also to metering communication adapter 801.

If the terminal device already receives signed user data (see MSB-DSS) via 897, the internal encryption may be omitted.

Similar to figure 7, a display of any meter can also be read by camera (CCD or CMOS) in order to obtain the required register values: Here, the terminal device 801 may be attached to the meter reading display 987 of a consumption meter. The consumption meter may show the meter reading via the display. The meter reading is e.g. {"1.8.0": 1257}. The camera 802 of the interface board 801 reads the meter reading and converts the recorded image into a decimal number (i.e. the digitized meter reading shown). The data telegram formed in this way is transferred to the encryption module 815. The encrypted telegram is then sent to the base station via LoRaWAN using a sub-GHz radio module 804. It should be noted that the camera can record several different meter readings (e.g. registers 1.8.0 and 2.8.0) in succession and transmit the end device either in a combined or several separate radio telegrams.

Similarly, a pulse interface 897 of a meter may also be used to determine metering data. Here, the terminal device 801 may be attached to a pulse interface 897 of a consumption meter. This can be either a pulse-generating element (e.g. a rotating magnet) or a digital pulse output (e.g. reed contact) of a meter, depending on the design of the interface board. The end device receives this pulse signal via an input or a sensor 802 and adds up the number of pulses over a defined time interval. The data telegram formed in this way is transferred to the encryption module 815. The encrypted telegram is then sent to the base station via LoRaWAN using a sub-GHz radio module 804.

In analogy, any other sensor values may also be sent. The interface board may have a sensor (e.g. temperature, CO2 etc.) 8020 and read it out. The data telegram formed in this way is transferred to the encryption module 815. The encrypted telegram is then sent to the base station via LoRaWAN using a sub-GHz radio module 804.

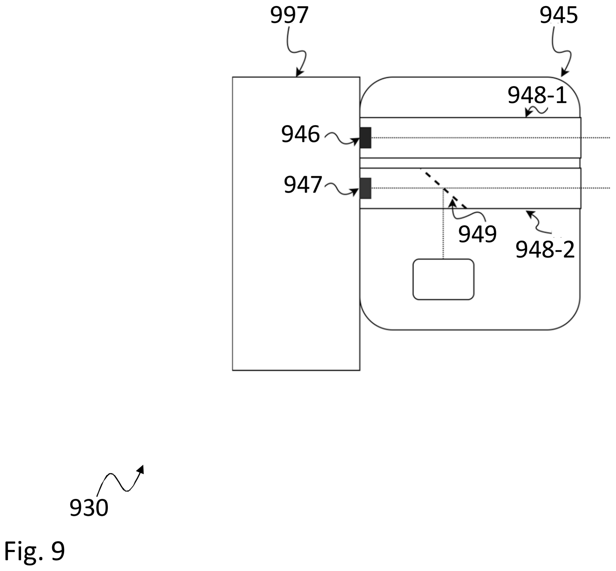

Figure 9 shows a block diagram of another second module 930 for use in a metering communication adapter according to the present disclosure. The second module 930 may be coupled to a metering interface 997 of a metering unit. The second module 930 may be provided as INFO-DSS interface board that interfaces to the INFO-DSS interface 997.

The central task of the interface board 930 in conjunction with a main module or base module for mME is to receive the data telegrams sent by an mME. This requires duplication of the INFO-DSS interface 997 in order to be able to make this interface available to the customer even after the installation of a modular terminal device.

Figure 9 shows the structure of the plug-in interface board or second module 930 in variant 1. An mME has an INFO-DSS interface 997 consisting of a receiver 946 and transmitter 947. The terminal device or second module 930 is attached to the INFO-DSS. The terminal device or second module 930 has a tunnel 948-1 through the device (hole through the housing), which makes the receiver 946 of the INFO-DSS interface 946 available to the outside world without being affected. A similar tunnel 948-2 is also used for the transmitter 947. In this tunnel there is a semi-transparent mirror 949, which transmits part of the light to the outside world and directs the remaining part to the IR receiver of the interface board 950 (= sensor).

In this case, the interface board is implemented as an IR receiver with signal processing.

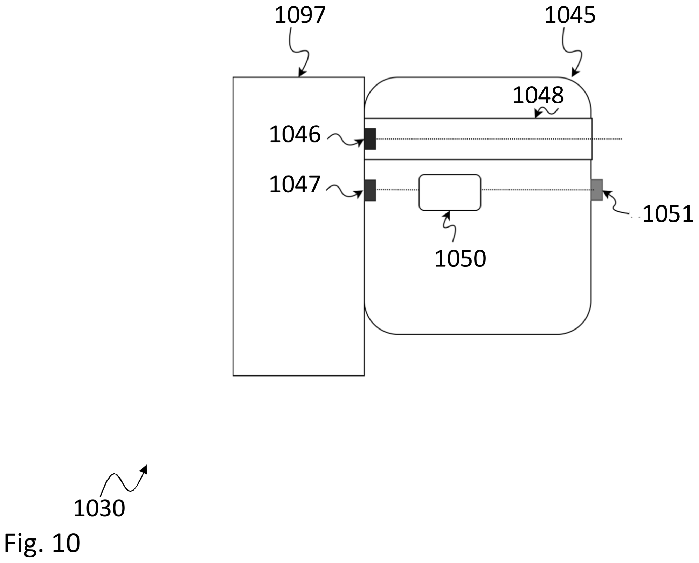

Figure 10 shows a block diagram of another second module 1030 for use in a metering communication adapter according to the present disclosure. Figure 10 shows the structure of the plug-on interface board or first module 1030 in variant 2. An mME has an INFO-DSS interface 1097 consisting of a receiver 1046 and transmitter 1047. The terminal device is attached to the IR-INFO interface. The terminal device has a tunnel 1048 through the device (hole through the housing), which makes the receiver 1046 of the INFO-DSS available to the outside world without being affected. The signal from the transmitter 1047 is absorbed by the IR receiver 1050 of the interface board 1045. The signal is duplicated and transmitted to the outside world 1051.

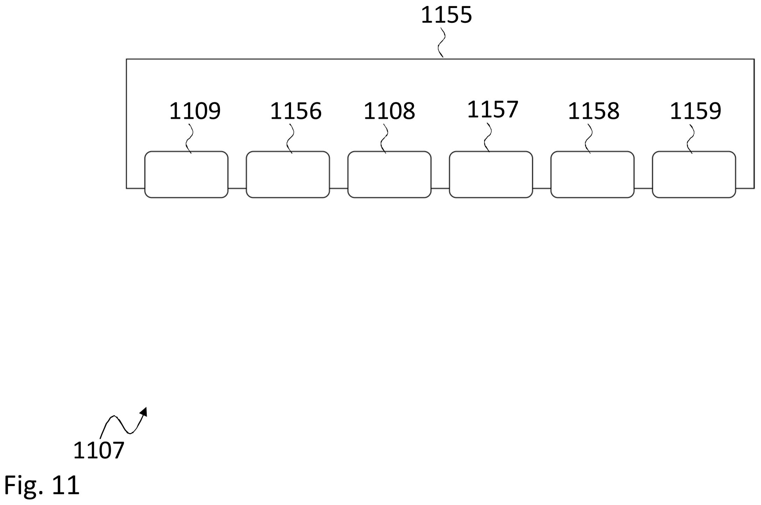

Figure 11 shows a block diagram of a concentrator unit 1107, also called base station 1107. The hardware components of the base station 1107 are explained below.

Figure 11 shows the schematic structure of the hardware components of the base station 1107. The base station 1107 consists of a main board 1155 (with processor, memory, secure key memory, etc.) and several interfaces or slots.

The Ethernet interface 1109 is used in SMGw mode as a HAN connection for the CLS proxy and in stand-alone mode for connection to the LAN.

A slot for a 3G/4G/5G module 1156 is used for the mobile data connection as an alternative to the LAN in stand-alone mode (hereinafter 5G module).

A slot for a sub-GHz radio module (for wM-Bus) 1108 is used as an LMN interface in SMGw mode (hereinafter LMN radio module). An additional (optional) M-Bus connection 1157 is used as a second LMN interface in SMGw mode.

One or more slots for radio modules 1158 for simultaneous communication on different frequencies (e.g. 433 and 868 MHz) and modulations (e.g. for LoRaWAN, mioty etc.) are used for long-range radio connection (hereinafter: SubGHz module).

An additional (optional) configuration port 1159 (USB, UART etc.) is used to set important parameters.

Software for external encryption and the associated key management is installed on the base station (e.g. LoRaWAN Network Server).

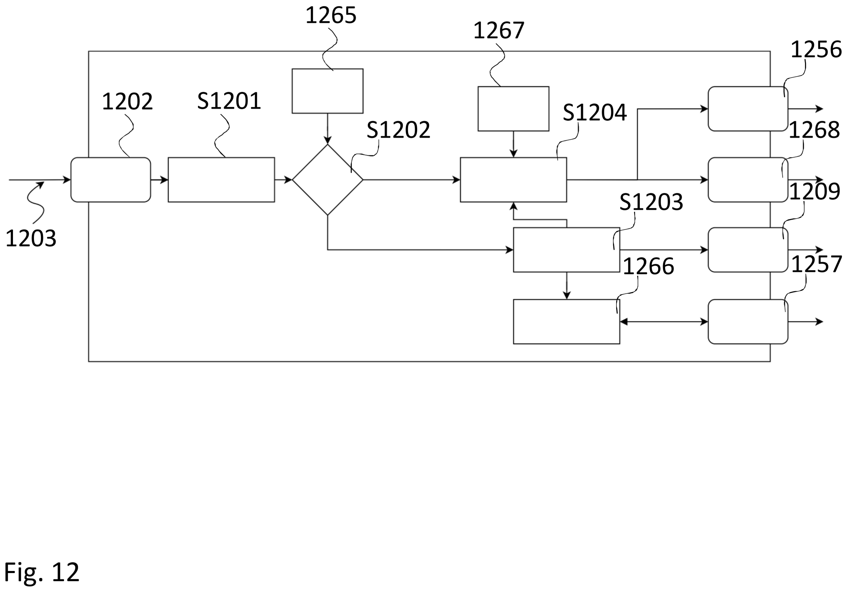

The uplink of terminal devices is explained according to Figure 12 regarding the base station 1107.

Figure 12 shows the processes or method performed e.g., in the base station 1107, when a telegram is received via the SubGHz module (uplink). The SMGw mode of the base station was selected.

The telegram 1203 sent by a terminal device contains double-encrypted data, e.g. {Payload: 65abdc764} as well as metadata such as SNR and the DevEUI of the transmitting device. This telegram is received by the SubGHz module 1202 or second communication interface and an ACK message may be sent back to the device if required. First, the outer encryption/signature is decrypted S1201 so that the following telegram can be received, for example: {"1.8.0": 3qv9, "2.8.0": g4a}.

The base station has a securely stored database 1265 (e.g. SQL, JSON file, etc.) with all LMN devices (e.g. electricity, gas, water meters) whose telegrams are to be transmitted via the LMN interface. S1202 uses this database to check whether the transmitting device is an LMN device (e.g. based on the DevEUI of the transmitting end device). If this is the case, the meter ID (and possibly other data) assigned by the metering point operator is added to the data telegram in S1203 (which is also stored in a secure database) and sent by the LMN radio module 1209 to the LMN radio module of an SMGw. This telegram then has the content {meter ID: 6548, "1.8.0": 3qv9, "2.8.0": g4a}, for example.

At the same time, the telegrams of the LMN devices are stored in a secure database 1266 in order to transmit them to the SMGw via the M-Bus port following a request from the SMGw received by the M-Bus port 1257. Due to these two inherently redundant transmission paths (wM-Bus and M-Bus) to the LMN of the SMGw, maximum reliability of the data transmission can be guaranteed. One of the two transmission paths can also be deactivated.

This process maps the second LMN-side part of the communication adapter according to PTB and thus completes it.

If the transmitting device is not an LMN device, the internal encryption can be decrypted S1204 if the key for the internal encryption has been stored in the secure key memory of the base station 1267. The encrypted or decrypted telegram can be transmitted to other devices via a SubGHz module 1256. In addition, the telegram is converted into an MQTT (or similar) telegram and sent to the CLS proxy of an SMGw via the HAN connection 1268.

For added value purposes, the LMN data telegram from S1203 can also be transmitted via the CLS proxy: For this purpose, the data telegram is copied to S1204 and runs through the same process. If necessary, the telegram can be anonymized in step S1203, e.g. by removing or randomizing the meter ID.

This ensures the functions of the LMN communication adapter and the SME. If the stand-alone module is selected instead, the database of the LMN devices is empty so that the LMN radio module and the M-Bus interface remain unused. The M-Bus port is also deactivated. All data is then transmitted via the LAN connection or the 5G module.

The downlink of 5G/SMGw is explained according to Figure 13 regarding the base station of the present disclosure.

Figure 13 shows the processes in the base station e.g., in concentrator unit 1107, when a telegram is received via the HAN interface (downlink). The SMGw mode of the base station was selected.

The SMGw transmits a data telegram to the base station via the HAN interface (CLS proxy). This data packet 1370 is TLS-encrypted and has the content {data: 0572a6f01}, for example. The base station receives this command via the HAN interface 1368. First, the outer encryption (e.g. TLS) is decrypted S1301, allowing the type of control command to be read S1302.

If this is a control telegram (for controlling a terminal device, e.g. wallbox), the DevEUI (a device id) of the target terminal device (i.e. the device that is to receive the control command) is also extracted. If the register values of the telegram are not encrypted and the secure key memory of the base station 1367 contains an internal key for the target terminal device, the telegram is encrypted with the internal encryption S1303. The telegram is then encrypted with the outer encryption S1304. The telegram then has the form {Payload: 8e9010}. This telegram is sent to the selected end device using the SubGHz module 1308.

If this is a management telegram (e.g. add new terminal device to the network), this command is evaluated on the base station and implemented S1305. Other mechanisms such as access to a database are included in the conversion.

If the stand-alone mode is selected instead, the command is received via the LAN port or the 5G module (instead of from the SMGw).

According to the invention, a communication adapter, also called communication system, is thus disclosed, in particular for the smart connection of consumption meters by means of long-range radio, in particular LoRaWAN and mioty, whereby the range of the communication link between base station, in particular with SMGw, and a consumption meter or smart meter (mME) is increased by the fact that a communication adapter for consumption meters, in particular according to PTB, is securely connected by means of long-range radio with network protocol.

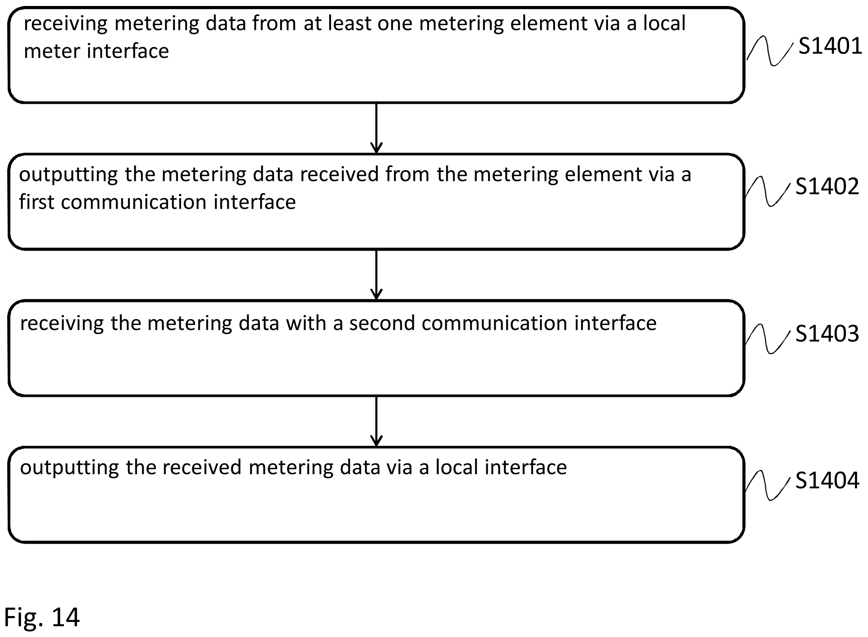

Figure 14 shows a flow diagram of a data communication method. The method comprises receiving S1401 metering data 103, 203, 303, 603, 703, 803, 1203, 1703, 1803, 1903, 2003, 2103, 2203, 2303, 2403-1, 2403-2, 2403-3, 2503 from at least one metering element 199, 299, 799, 899 via a local meter interface 102, 202, 402, 602, 702, 802, 1202, 1702, 2402-1, 2402-2, 2402-3, 2602-1, 2602-2, outputting S1402 the metering data 103, 203, 303, 603, 703, 803, 1203, 1703, 1803, 1903, 2003, 2103, 2203, 2303, 2403-1, 2403-2, 2403-3, 2503 received from the metering element 199, 299, 799, 899 via a first communication interface 104, 204, 404, 504, 704, 804, 1704, 2604, receiving S1403 the metering data 103, 203, 303, 603, 703, 803, 1203, 1703, 1803, 1903, 2003, 2103, 2203, 2303, 2403-1, 2403-2, 2403-3, 2503 with a second communication interface 108, 308, 1108, 1308, 1808, 1908, 2008, 2108, 2208, 2308, and outputting S1404 the received metering data 103, 203, 303, 603, 703, 803, 1203, 1703, 1803, 1903, 2003, 2103, 2203, 2303, 2403-1, 2403-2, 2403-3, 2503 via a local interface 109, 309, 1109, 1209, 1809, 1909, 2009, 2109, 2209, 2309-1, 2309-2.

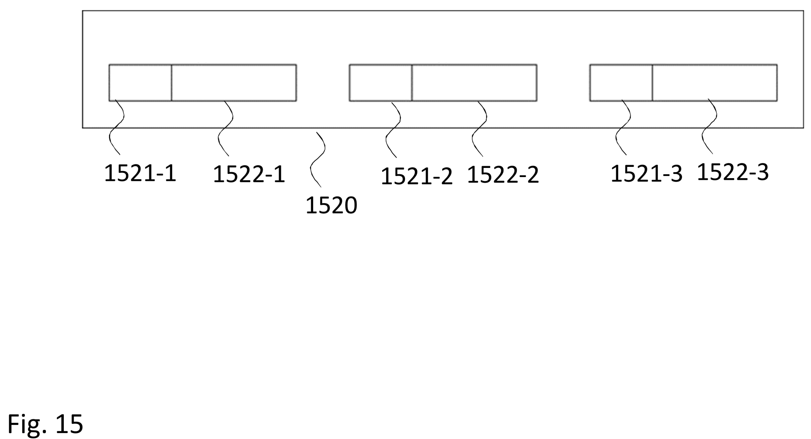

Figure 15 shows a block diagram of a possible data packet 1520. In particular, figure 15 shows the schematic structure of a data telegram 1520 that comprises of several data records, which in turn contain the identifier of a register 1521-1, 1521-2, 1521-3 and the associated register values 1522-1, 1522-2, 1522-3. For the internal encryption or signature, the content of the register values is first encrypted or signed with the internal key. The entire data telegram may then be encrypted/signed with a second outer key.

This encryption architecture makes it possible, for example, to store the individual encrypted register values in separate databases without having to decrypt the values for correct storage, as the register identifier is readable.

Depending on the programming, the inner key may be implemented as regular (or CMAC) AES encryption or, for example, as an ECC192 signature in accordance with the FNN specification "EDL" (for BSI conformity).

This type of internal and external encryption is used by the MSB interface, for example. The OMS Group presents a similar implementation, e.g. in Technical Report 06 "OMS over LoRaWAN". However, the telegram structure described therein requires far more bytes (see p. 38 f.) than the procedure described herein and, therefore, limits the device density.

Note: If (legally) prescribed, the register identifiers can also be encrypted with the inner key.

Example: Representation of a reduced data telegram of an mME:

```
{
       1.8.0: 56841020, register 1.8.0: Energy consumption in Wh
       2.8.0: 3197930 Register 2.8.0: Energy supply in Wh
       }
```

```
1. internal encryption / signature: user data
       {
       1.8.0: a9b0973f,
       2.8.0: 0dae71
       }
```

```
 2. outer encryption: complete telegram
  {data: 9e6f73100ae2078f}
```

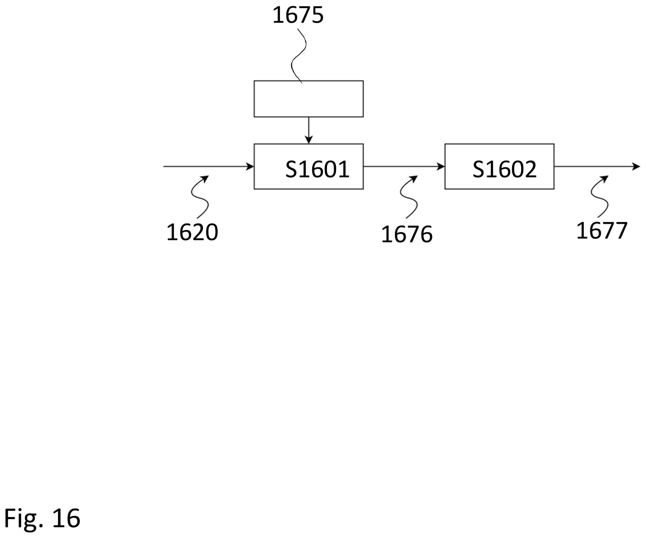

Figure 16 shows a flow diagram of another embodiment of a method according to the present disclosure. Figure 16 shows the procedure for internal and external encryption, which is referred to as the encryption module for the data flow: A data telegram 1620 to be encrypted is passed to the encryption module. The device has a securely stored key (e.g. AES, ECC192) 1675. This key is used to encrypt or sign the user data of the telegram with the internal encryption S1601. This data telegram 1676 is then additionally encrypted with the outer key (e.g. AES, TLS or ECC192) S1602. The double-encrypted telegram 1677 is then returned to the device for further data flow.

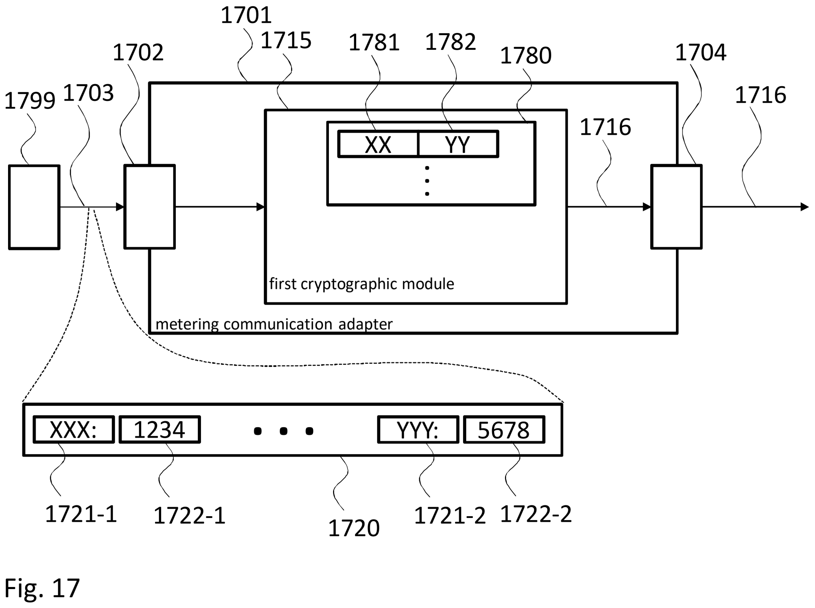

Figure 17 shows a block diagram a metering communication adapter 1701. The metering communication adapter 1701 is based on the metering communication adapter 201. Therefore, the metering communication adapter 1701 comprises a local meter interface 1702, and a first communication interface 1704, as already described with regard to figure 1. The metering communication adapter 1701 further comprises a first cryptographic module 1715 coupled between the local meter interface 1702 and the first communication interface 1704. The explanations provided herein for any embodiment of the metering communication adapter, especially the metering communication adapter 201, apply mutatis mutandis to metering communication adapter 1701.

The metering communication adapter 1701 further comprises a key memory 1780 in the first cryptographic module 1715 that holds cryptographic keys 1781, with respective validity data 1782.

Single cryptographic keys 1781 may be provided for encrypting communication with any communication partner, or different cryptographic keys 1781 may be provided for encrypting communication with each one of individual communication partners. The validity data 1782 may e.g., refer to date-based validities.

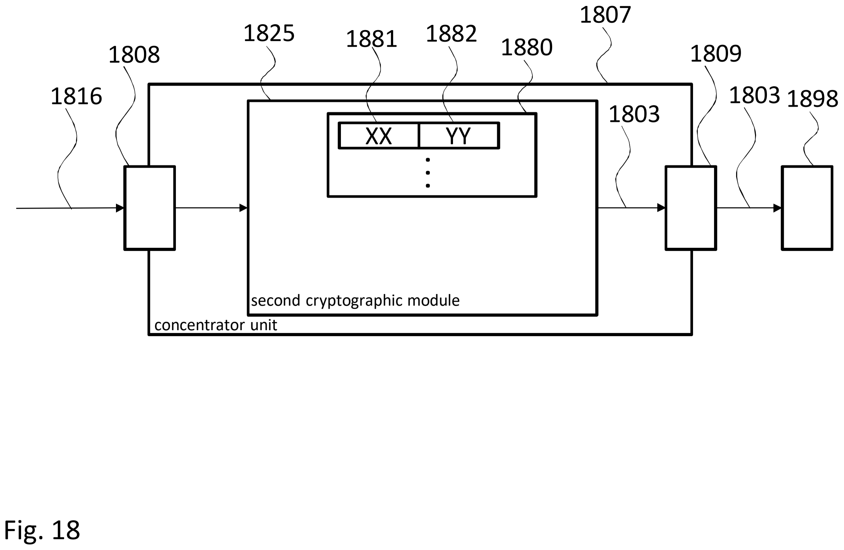

Figure 18 shows a block diagram of a concentrator unit 1807. The concentrator unit 1807 is based on the concentrator unit 107 as shown in figure 1. Therefore, the concentrator unit 1807 comprises a second communication interface 1808 for receiving the metering data 1803 output by a metering communication adapter. Further, the concentrator unit 1807 comprises a local interface 1809 for outputting the received metering data 1903 e.g., to a smart meter gateway 1998. Further, the concentrator unit 1807 comprises a second cryptographic module 1825 that is coupled between the second communication interface 1808 and the local interface 1809. The explanations provided herein for any embodiment of the concentrator unit, especially the concentrator unit 307, apply mutatis mutandis to concentrator unit 1807.

The concentrator unit 1807 further comprises a key memory 1880 in the second cryptographic module 1825 that holds cryptographic keys 1881, with respective validity data 1882.

Single cryptographic keys 1881 may be provided for encrypting communication with any communication partner, or different cryptographic keys 1881 may be provided for encrypting communication with each one of individual communication partners. The validity data 1882 may e.g., refer to date-based validities.

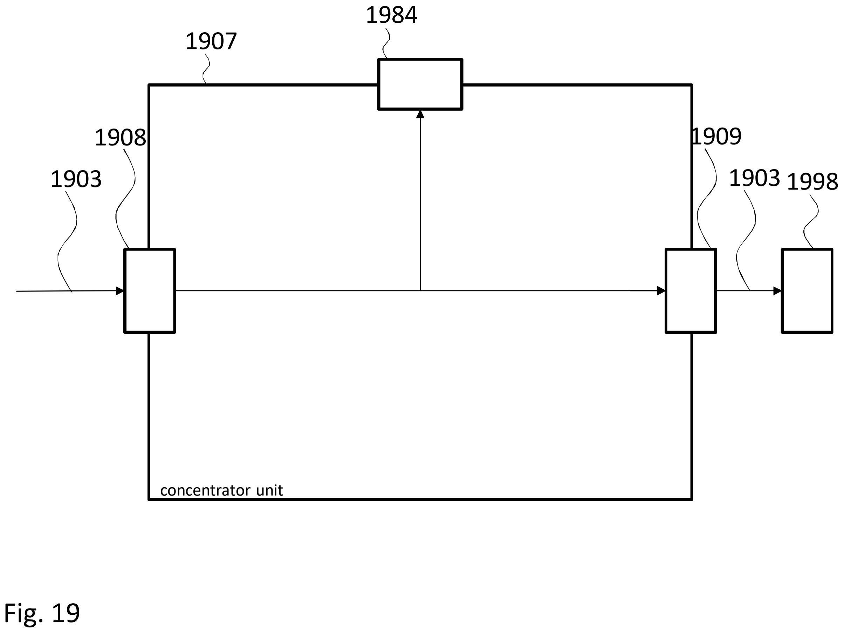

Figure 19 shows a block diagram of another concentrator unit 1907. The concentrator unit 1907 is based on the concentrator unit 107. The concentrator unit 1907, therefore, comprises a second communication interface 1908 and a local interface 1909 as already explained with regard to figure 1. The explanations provided herein for any embodiment of the concentrator unit apply mutatis mutandis to concentrator unit 1907.

The concentrator unit 1907 further comprises a third communication interface 1984 that is coupled to the second communication interface 1908 for receiving the metering data 1903.

The third communication interface 1984 may be used by the concentrator unit 1907 to output the received metering data 1903 via the third communication interface 1984. The concentrator unit 1907 may also deactivate the third communication interface 1984 while the local interface 1909 is active, and deactivate the local interface 1909 while the third communication interface 1984 is active.

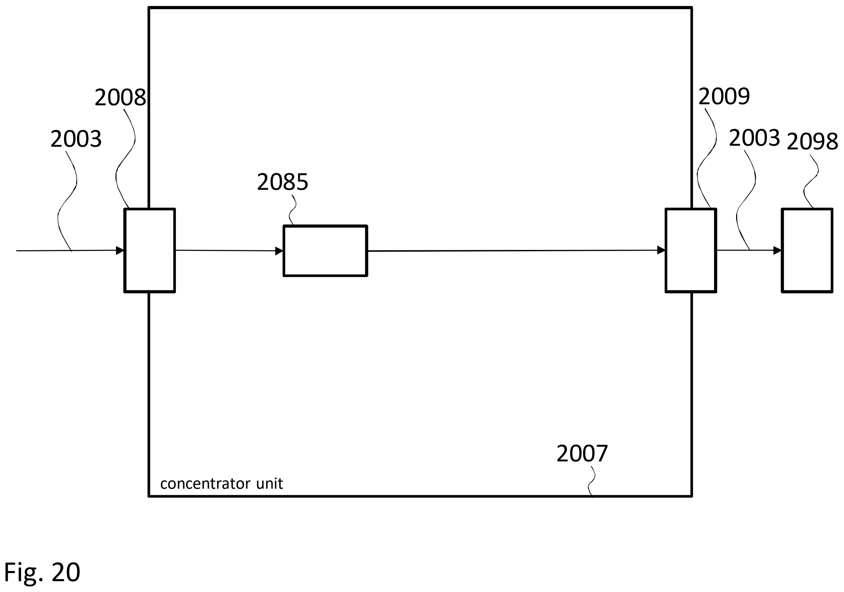

Figure 20 shows a block diagram of a concentrator unit 2007. The concentrator unit 2007 is based on the concentrator unit 107. The concentrator unit 2007, therefore, comprises a second communication interface 2008 and a local interface 2009 as already explained with regard to figure 1. The explanations provided herein for any embodiment of the concentrator unit apply mutatis mutandis to concentrator unit 2007.

The concentrator unit 2007 further comprises a communication application server 2085 that is coupled to the second communication interface 2008. The communication application server 2085 may authenticate the at least one metering communication adapter that communicates with the concentrator unit 2007, and may manage the communication with the at least one metering communication adapter.

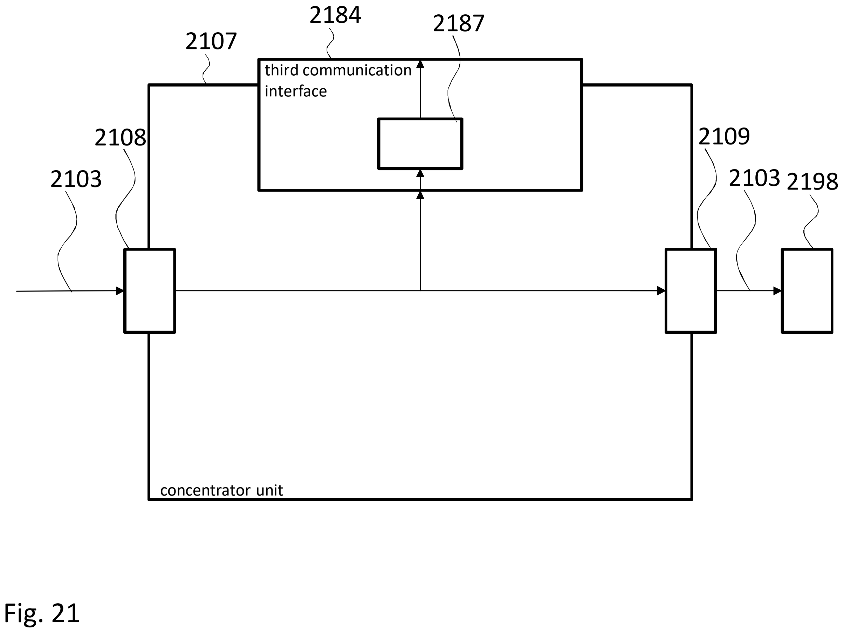

Figure 21 shows a block diagram a concentrator unit 2107. The concentrator unit 2107 is based on the concentrator unit 107. The concentrator unit 21007, therefore, comprises a second communication interface 2108 and a local interface 2109 as already explained with regard to figure 1. The explanations provided herein for any embodiment of the concentrator unit apply mutatis mutandis to concentrator unit 2107.

The third communication interface 2184 further comprises a communication controller 2187 that receives the metering data 2103 and may at least one of add meta data to the metering data 2103, anonymize the metering data 2103, decrypt the metering data 2103, and encrypt the metering data 2103.

The communication controller 2187 may further receive a data packet via the third communication interface 2184, and may at least one of decrypt the data packet, encrypt the data packet, identify a control command in the data packet, process a control command in the data packet, and forward the data packet via at least one of the second communication interface 2108, and the local interface 2109.

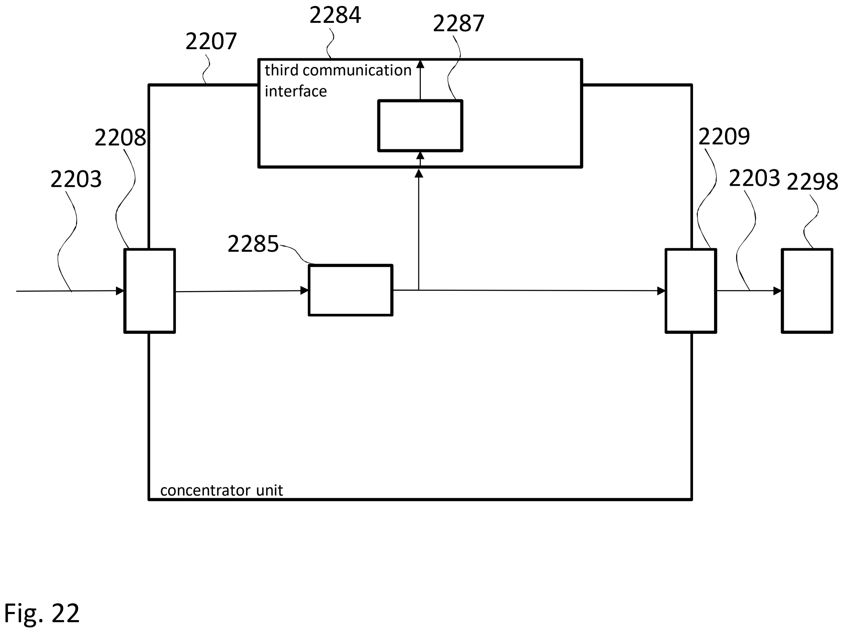

Figure 22 shows a block diagram of a further concentrator unit 2207. The concentrator unit 2207 is a combination of the concentrator unit 1907, and the concentrator unit 2007. Therefore, the concentrator unit 2207 comprises a second communication interface 2208 and a local interface 2209 as already explained with regard to figure 1. The explanations provided herein for any embodiment of the concentrator unit apply mutatis mutandis to concentrator unit 2207.

The concentrator unit 2107 further comprises a third communication interface 2284 that is coupled to the second communication interface 2208 for receiving the metering data 2203. The concentrator unit 2007 further comprises a communication application server 2285 that is arranged between the second communication interface 2208, the local interface 2209, and the third communication interface 2284. The communication application server 2285 may authenticate the at least one metering communication adapter that communicates with the concentrator unit 2207, and may manage the communication with the at least one metering communication adapter.

The communication application server 2285 may forward received metering data 2203 to the third communication interface 2284 after handling the received metering data 2203 according to the respective communication protocol or method.

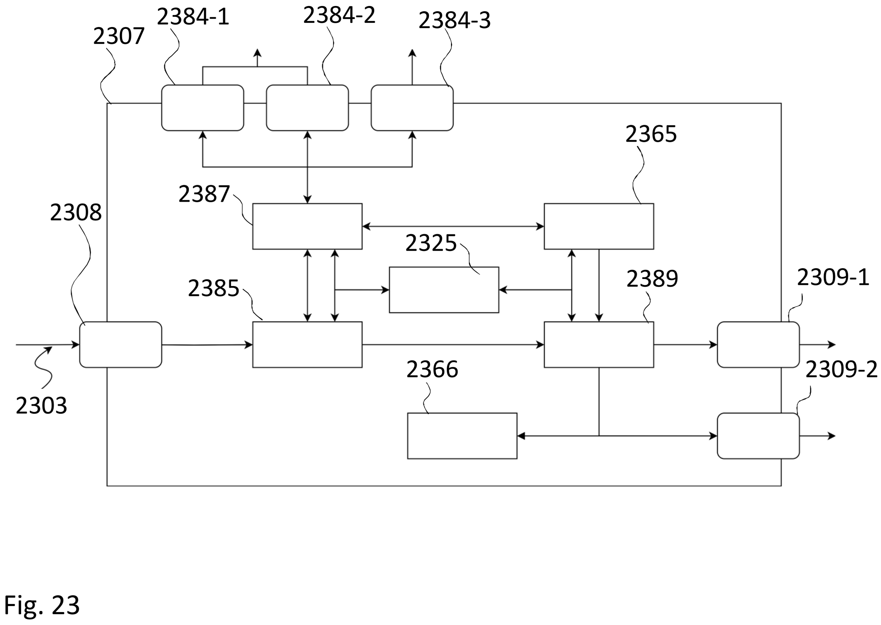

Figure 23 shows a block diagram of another concentrator unit 2307. The concentrator unit 2307 is based on the concentrator unit 107. The concentrator unit 2307, therefore, comprises a second communication interface 2308 and a local interface 2309-1, 2309-2 as already explained with regard to figure 1. The explanations provided herein for any embodiment of the concentrator unit apply mutatis to concentrator unit 2307.

The concentrator unit 2307 further comprises a communication application server 2385 coupled to the second communication interface 2308, and a communication controller 2387 coupled between the communication application server 2285, and the third communication interface, here implemented as three third communication interfaces 2384-1, 2384-2, 2384-3.

The concentrator unit 2307 further comprises a second cryptographic module 2325 that is coupled to the communication application server 2285, and the communication controller 2387. Further, the concentrator unit 2307 comprises a database 2365 coupled to the communication controller 2387, and the second cryptographic module 2325, and a distribution module 2389 coupled to the database 2365, the communication controller 2387, and the second cryptographic module 2325. The distribution module 2389 is coupled to a secure database 2366, and two local interfaces 2309-1, 2309-2. The explanations provided with regard to the database 1265 apply mutatis mutandis to database 2365, and the explanations provided with regard to secure database 1266 apply mutatis mutandis to database 2366.

The metering data 2303 sent by a terminal device may contain double-encrypted data, e.g. {Payload: 65abdc764} as well as metadata such as SNR and the DevEUI of the transmitting device. This metering data 2303 may be received by the second communication interface 2308 and an ACK message may be sent back to the device if required. First, the outer encryption/signature may be decrypted by communication application server 2385 or second cryptographic module 2325 so that the following data is available, for example: {"1.8.0": 3qv9, "2.8.0": g4a}.

The communication application server 2385 may also act like a local LoRaWAN network and application server, and perform device management and authentication. The communication application server 2385 may also provide additional data to the communication controller 2387, like a signal-to-noise ratio, or may perform a P2P encryption. The metering data 2203 may then be provided via the third communication interfaces 2384-1, 2384-2, 2384-3 to respective receivers. As option, an Ethernet-based third communication interface 2384-1, 2384-2, 2384-3 may be used as HAN for a CLS-Proxy of the SMGw. One of the third communication interfaces 2384-1, 2384-2, 2384-3 may comprise a SubGHz interface. The data may also be anonymized for transmission to e.g., a cloud server.

The concentrator unit 2307 further comprises the securely stored database 2365 (e.g. SQL, JSON file, etc.) with all LMN devices (e.g. electricity, gas, water meters) whose telegrams are to be transmitted via the second communication interface 2308. Distribution module 2389 uses this database to check whether the transmitting device is an LMN device (e.g. based on the DevEUI of the transmitting end device). Alternatively, other meta data (e.g. the LoRaWAN fPort) can be used for determining whether a received telegram is determined to be forwarded to the LMN of a SMGw. If this is the case, additional meta data can be added or removed (e.g. adding the OMS wM-Bus MBAL header and removing the DLL and ELL headers) and the telegram can be sent by one or both of the local interfaces 2309-1, 2309-2 to the LMN radio module of an SMGw. This telegram then has the content {meter ID: 6548, "1.8.0": 3qv9, "2.8.0": g4a}, for example.

For example, the telegrams of the LMN devices may be stored in a secure database 2366 in order to transmit them to the SMGw via the M-Bus port (local interface 2309-2) following a request from the SMGw received by the M-Bus port, after transmitting the telegrams to the SMGw via the wireless local interface 2309-1. Due to these two inherently redundant transmission paths (wM-Bus and M-Bus) to the LMN of the SMGw, maximum reliability of the data transmission can be guaranteed. One of the two transmission paths can also be deactivated.

If the transmitting device is not an LMN device, the internal encryption can be decrypted if the key for the internal encryption has been stored in the secure key memory of the concentrator unit 2307. The encrypted or decrypted telegram can be transmitted to other devices via a SubGHz module 2384-3. In addition, the telegram may be converted into an MQTT (or similar) telegram and sent to the CLS proxy of an SMGw via the HAN connection.

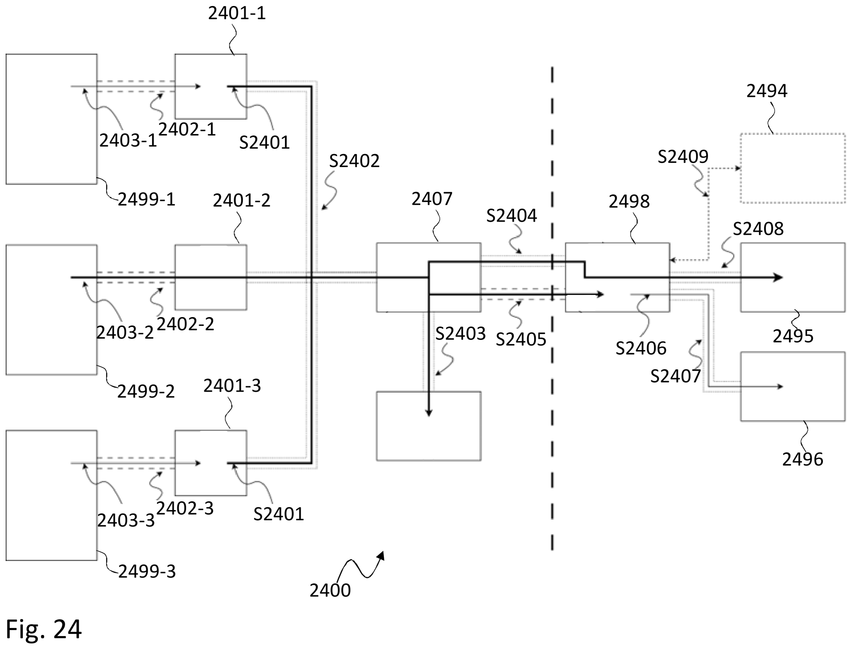

Figure 24 shows a block diagram of a communication system 2400. The communication system 2400 exemplarily comprises three metering elements 2499-1, 2499-2, 2499-3 that are each coupled to a metering communication adapter 2401-1, 2401-2, 2401-3. The metering communication adapters 2401-1, 2401-2, 2401-3 are communicatively coupled to concentrator unit 2407 that is coupled to smart meter gateway 2498. The smart meter gateway 2498 may be coupled to an operator server 2496, a cloud server 2495, and a GWA 2494, also called Gateway Administrator Server.

In figure 24, signals with a bold line are end-to-end encrypted. Non-bold or thin lines refer to non-end-to-end encrypted signals. Channels with a dotted border refer to P2P-encrypted channels, and channels with dashed border refer to non-P2P-encrypted channels.

Exemplarily, power meter 2499-1 (or any other type of meter) may transmit an impulse signal (metering data 2403-1) to the metering communication adapter 2401-1. The metering communication adapters 2401-1 in step S2401 may apply an end-to-end or E2E encryption and transmit the data to concentrator unit 2407 with peer-to-peer or P2P encryption in step S2402. In further examples, the metering element 2499-2 may be a power meter that provides end-to-end encrypted data to metering communication adapter 2401-2. Such data may directly be transmitted to concentrator unit 2407. The metering element 2499-3 may be any other type of metering device that provides data to metering communication adapter 2401-3 via any type of interface, wherein the data is no LMN data. Such data may directly be transmitted to concentrator unit 2407 or may be transport encrypted in step S2401.

The concentrator unit 2407 receives the data provided by the metering communication adapters 2401-1, 2401-2, 2401-3, and may transmit at least part of the data to a cloud server in step S2403, or to a smart meter gateway 2498 via wM-Bus in step S2405, or via HAN/CLS in step S2404.

The smart meter gateway 2498 may then at least one of store, encrypt, and forward the data to either an operator server 2496, a cloud server 2495, or a GWA 2494.

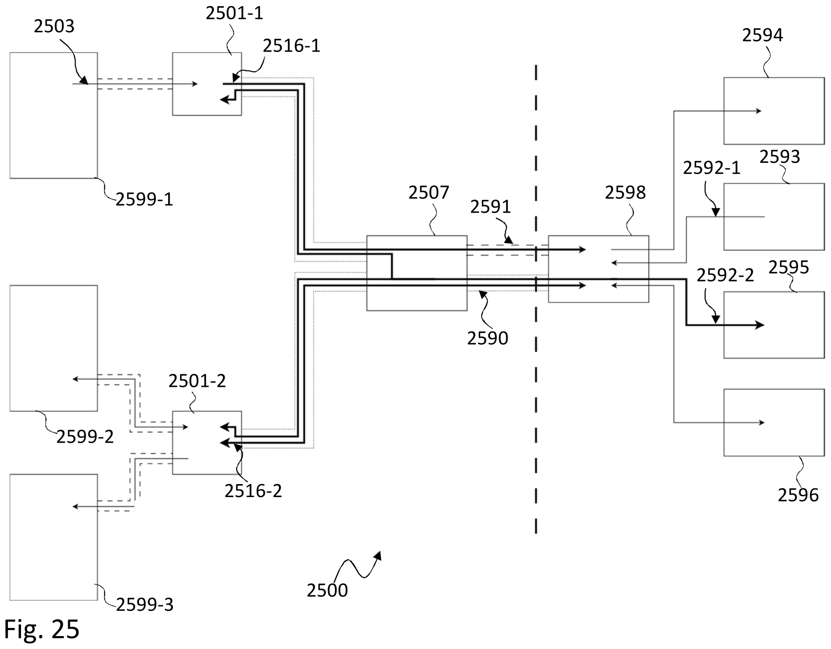

Figure 25 shows a block diagram of a communication system 2500. The communication system 2500 is loosely based on the communication system 2400. Therefore, the communication system 2500 exemplarily comprises a metering element 2599-1, and two controllable units 2599-2, 2599-3. The controllable units 2599-2, 2599-3 may comprise, e.g., controllable consumers or controllable generators, as already indicated above. The metering element 2599-1 is coupled to a metering communication adapter 2501-1, and the controllable units 2599-2, 2599-3 are coupled to another metering communication adapter 2501-2, also called control communication adapter 2501-2.

It is understood, that the independent claims regarding the communication system, and the communication method that comprise the control communication adapter, may implement communication according to any one of the embodiments disclosed for the metering communication adapters and the concentrator unit disclosed herein. For example, a single encryption or a first and second encryption may be applied. The control communication adapter as explained above may be an implementation of the metering communication adapter. In embodiments, the control communication adapter may be an embodiment of the metering communication adapter that does not perform the transmission of the metering data but only the transmission of the control data.

The metering communication adapters 2501-1, and 2501-2 are communicatively coupled to concentrator unit 2507 that is coupled to smart meter gateway 2598. The smart meter gateway 2598 may be coupled to an operator server 2596, a cloud server 2595, a GWA 2594, and a control server 2593. At least one of the operator server 2596, the cloud server 2595, and the control server 2593 may also be provided after the GWA 2594. In such embodiments, the GWA 2594 will act as a kind of data relay.

In figure 25, signals with a bold line are end-to-end encrypted. Non-bold or thin lines refer to non-end-to-end encrypted signals. In other embodiments, the thin lines may also indicate end-to-end encrypted data or signals. Channels with a dotted border refer to P2P-encrypted channels, and channels with dashed border refer to non-P2P-encrypted channels. Such channels may, however, still comprise an encryption, e.g., the first encryption. All explanations provided herein for any one of the embodiments of the communication system apply mutatis mutandis to the communication system 2500.

The concentrator unit 2507 may be coupled to the smart meter gateway 2598 via HAN/CLS communication 2590 and LMN communication 2591, as already described above. The LMN communication 2591 may comprise, e.g., a communication via the wM-Bus.

The metering communication adapter 2501-1 serves as metering communication adapter for a metering element 2599-1 that may be a power meter. Such embodiments are also described above, and the respective explanations apply mutatis mutandis. The metering communication adapter 2501-1 may be coupled to the metering element 2599-1 via a wireless, optical or wired connection, like an Ethernet or a UART or Modbus connection. The metering communication adapter 2501-1 may be coupled to the MSB-DSS of the metering element 2599-1. Communication via the INFO-DSS or an impulse counter interface is also possible.

The metering communication adapter 2501-1 may receive the metering data 2503 in encrypted or unencrypted form. If the metering data 2503 is received in encrypted form, the metering communication adapter 2501-1 may decrypt the metering data 2503, and may perform a respective re-encryption into a predetermined data format. As explained above, a first encryption and a second encryption may performed resulting in cryptographically encrypted metering data 2516. The encrypted metering data 2516 is then provided to the concentrator unit 2507 that decrypts the second encryption and provides the metering data 2503 to the smart meter gateway 2598. This metering data 2503 may still be encrypted, e.g., with the first encryption.

The metering communication adapter 2501-2 serves for controlling controllable units 2599-2, 2599-3. The metering communication adapter 2501-2 may, e.g., be a control unit according to BSI TR-03109-5. The metering communication adapter 2501-2 may be coupled to any number and types of controllable units. In the example of figure 25, the controllable unit 2599-3 may be a so called primitive controllable unit 2599-3. Such a primitive controllable unit 2599-3 may be controlled, e.g., via relay outputs (indicated by unidirectional arrows) of the metering communication adapter 2501-2. The controllable unit 2599-2 may be a digitally controllable unit, and the communication may be performed via a digital data interface (indicated by a bi-directional arrow). Such a digital data interface may comprise, but is not limited to, a wireless, optical or wired interface, e.g., a Modbus or EEBUS interface, as already indicated above.

For controlling the controllable unit 2599-2, the control server 2593 may issue or output respective control data 2592-1 for controlling the controllable units 2599-2, 2599-3. The control data 2592-1 may be provided to the smart meter gateway 2598 in unencrypted or single encrypted format. The smart meter gateway 2598 may encrypt the control data 2592-1 and forward the encrypted control data 2592-1 to the concentrator unit 2507. Alternatively, the smart meter gateway 2598 may forward the control data 2592-1 to the concentrator unit 2507, and the concentrator unit 2507 may encrypt the control data 2592-1. The concentrator unit 2507 forwards the control data 2592-1 to the metering communication adapter 2501-2 that forwards the respective control data 2592-1 to either one of the controllable units 2599-2, 2599-3 or executes respective control via the relay outputs. In embodiments, the metering communication adapter 2501-2 may perform a translation of the control data 2592-1 into a format compatible with the controllable unit 2599-2. After providing the control data 2592-1 to the controllable units 2599-2, 2599-3, and possible confirmation by at least controllable unit 2599-2, the metering communication adapter 2501-2 may provide a confirmation to the control server 2593 via the same signal path in reverse direction.

In embodiments, e.g., the cloud server 2595 may provide firmware data 2592-2 in a P2P (and possibly also E2E) encrypted form via smart meter gateway 2598, concentrator unit 2507, and a respective one of the metering communication adapters 2501-1, 2501-2 to any one of the controllable unit 2599-1, and the controllable units 2599-2. Further, time synchronization may also be performed via this route.

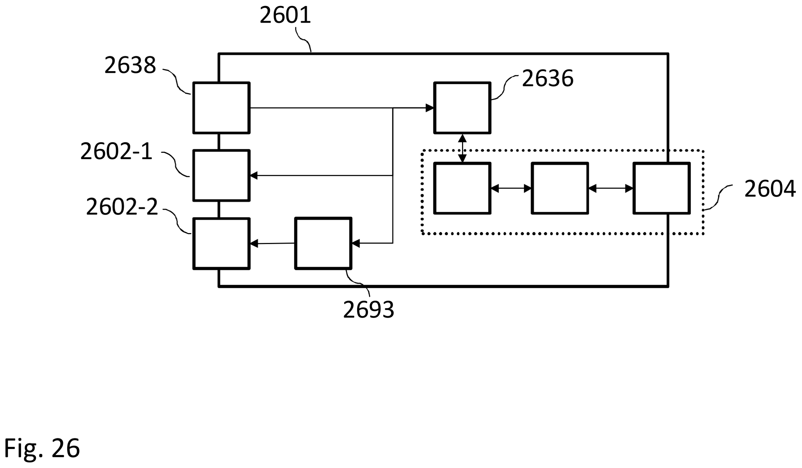

Figure 26 shows a metering communication adapter 2601 that may operate as a control communication adapter for controlling consumers or generators, as already indicated above.

The metering communication adapter 2601 comprises a microcontroller 2636 that is coupled to an external power input 2638, while an internal power supply is also possible. The microcontroller 2636 is further coupled to a first communication interface 2604 that may exemplarily comprise a wireless modem unit coupled to the microcontroller, wherein the wireless modem unit is coupled to a power amplifier that is coupled to an antenna port.

The microcontroller 2636 is further coupled to a first local meter interface 2602-1, which in this case is embodied as a digital data interface for controlling a controllable unit. The first local meter interface 2602-1 may comprise any of the types of interfaces disclosed herein.

The microcontroller 2636 is further coupled to a relay 2693 that is coupled to a second local meter interface 2602-2 that is a power interface controlled by the relays.

The processes, methods, or algorithms disclosed herein can be deliverable to/implemented by a processing device, controller, or computer, which can include any existing programmable electronic control unit or dedicated electronic control unit. Similarly, the processes, methods, or algorithms can be stored as data and instructions executable by a controller or computer in many forms including, but not limited to, information permanently stored on non-writable storage media such as ROM devices and information alterably stored on writeable storage media such as floppy disks, magnetic tapes, CDs, RAM devices, and other magnetic and optical media. The processes, methods, or algorithms can also be implemented in a software executable object. Alternatively, the processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claims.

Accordingly, it is to be understood that the above description is intended to be illustrative and not restrictive. Many embodiments and applications other than the examples provided would be apparent upon reading the above description. The scope should be determined, not with reference to the above description, but should instead be determined with reference to the appended claims, along with the full scope of equivalents to which such claims are entitled. It is anticipated and intended that future developments will occur in the technologies discussed herein, and that the disclosed systems and methods will be incorporated into such future embodiments. In sum, it should be understood that the application is capable of modification and variation.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

The abstract of the disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

### List of Abbreviations used in the description

- mME: moderne measurement equipment (Messeinrichtung): digital power meter / Smart Meter
- INFO-DSS: Infrared Info Data Interface (unidirectional)
- MSB-DSS: Infrared Data Interface for the operator of the metering point (bidirectional)
- Useful data: Metering data to be protected, Control data and the like e.g., for inner encryption
- Smart Metering: Reading of main measuring points for electricity, water, gas, etc.
- Sub-metering: Reading of sub-metering points (apartment water meters, heat cost allocators, etc.)
- Control: Devices such as charging points, thermostats, etc.
- Automated control: control of devices without the internet
- SMGw: Smart meter gateway according to BSI (Bundesamt für Sicherheit in der Informationstechnik) standards for connecting domestic devices to the Internet
- EMT: external market participant (except grid operator, metering point operator) with access to the SMGw
- CLS proxy: Secure connection route between EMT and local device
- LMN: Network for the transmission of metering data from smart metering (especially to the SMGw)
- SE: Control unit for the SMGw
- SME: Sub-metering unit for the SMGw
- LoRaWAN: 868 MHz (long-range) radio with network protocol (MAC), also used herein as a synonym for other radio protocols such as mioty
- Base station: Base station/gateway for LoRaWAN to receive and send radio telegrams from end devices, interface between Internet/SMGw and LoRaWAN
- DevEUI: Unique device ID in the network (cf. IP or MAC address)
- P2P: Point-to-Point Encryption: Transport encryption between two communication entities
- E2E: End-to-End Encryption: Data encryption across multiple communication entities

### LIST OF REFERENCE SIGNS

- 100, 2400, 2500: communication system
- 101, 201, 401, 701, 801, 1701: metering communication adapter
- 2401-1, 2401-2, 2401-3, 2501-1, 2501-2: metering communication adapter
- 2601: metering communication adapter
- 102, 202, 402, 602, 702, 802, 1202, 1702: local meter interface
- 2402-1, 2402-2, 2402-3, 2602-1, 2602-2: local meter interface
- 103, 203, 303, 603, 703, 803, 1203, 1703: metering data
- 1803, 1903, 2003, 2103, 2203, 2303: metering data
- 2403-1, 2403-2, 2403-3, 2503: metering data
- 104, 204, 404, 504, 704, 804, 1704: first communication interface
- 2604: first communication interface

- 107, 307, 1107, 1807, 1907, 2007, 2107: concentrator unit
- 2207, 2307, 2407: concentrator unit
- 108, 308, 1108, 1308, 1808, 1908, 2008: second communication interface
- 2108, 2208, 2308: second communication interface
- 109, 309, 1109, 1209, 1809, 1909, 2009: local interface
- 2109, 2209, 2309-1, 2309-2: local interface

- 215, 415, 715, 815, 1715: first cryptographic module
- 216, 316, 1716, 1816, 2516: cryptographically encrypted metering data

- 220, 1520, 1620: data package
- 221-1, 221-2, 1521-1, 1521-2, 1522-3: meta data
- 1721-2, 1722-3: meta data
- 222-1, 222-2, 1522-1, 1522-2, 1522-3: measurement data
- 1722-2, 1722-3: measurement data

- 325, 1825, 2325: second cryptographic module

- 430, 630, 930, 1030: first module
- 431, 631: first coupling interface
- 432, 532: second module
- 433, 533: second coupling interface

- 535, 635: board
- 536, 636, 2636: microcontroller
- 537: power source
- 538, 2638: external power input

- 945, 1045: housing
- 946, 1046: receiver
- 947, 1047: sender
- 948-1, 948-2, 1048: tunnel
- 949: semi-transparent mirror
- 950: receiver

- 1050: controller
- 1051: sender

- 1155: board
- 1156, 1256: communication interface
- 1157, 1257: M-Bus communication interface
- 1158: wireless communication interface
- 1159: configuration interface

- 1265, 2365: database
- 1266, 2366: secure database
- 1267, 1367: key database
- 1268, 1368: HAN communication interface

- 1370: data packet

- 1675: cryptographic key
- 1676: single encrypted data package
- 1677: double encrypted data package
- 1780, 1880: key memory
- 1781, 1881: cryptographic key
- 1782, 1882: validity data

- 1984, 2184, 2284, 2384-1, 2384-2: third communication interface
- 2384-3: third communication interface

- 2085, 2285, 2385: communication application server

- 2187, 2287, 2387: communication controller

- 2389: distribution module

- 2590: HAN/CLS communciation
- 2591: LMN communciation
- 2592-1: control data
- 2592-2: firmware data

- 2693: realy

- 199, 299, 799, 899, 1799, 2499-1: metering element
- 2499-2, 2499-3: metering element
- 198, 398, 1898, 1998, 2098, 2198, 2298: smart meter gateway
- 2498: smart meter gateway
- 797, 897, 997, 1097: metering interface
- 2496: operator server
- 2495: cloud server
- 2494: GWA
- 2593: control server

- S1201, S1202, S1203, S1204: method steps
- S1301, S1302, S1303, S1304, S1305: method steps
- S1401, S1402, S1403, S1404, S1405: method steps
- S1501, S1502: method steps
- S1601, S1602: method steps
- S2401, S2402, S2403, S2404, S2405: method steps
- S2406, S2407, S2408, S2409: method steps

## Claims

1. Communication system (100, 2400, 2500) comprising:
at least one metering communication adapter (101, 201, 401, 701, 801, 1701, 2401-1, 2401-2, 2401-3, 2501-1, 2501-2, 2601), the metering communication adapter (101, 201, 401, 701, 801, 1701, 2401-1, 2401-2, 2401-3, 2501-1, 2501-2, 2601) comprising a local meter interface (102, 202, 402, 602, 702, 802, 1202, 1702, 2402-1, 2402-2, 2402-3, 2602-1, 2602-2) configured to communicatively couple to a metering element (199, 299, 799, 899, 1799, 2499-1, 2499-2, 2499-3), and to receive metering data (103, 203, 303, 603, 703, 803, 1203, 1703, 1803, 1903, 2003, 2103, 2203, 2303, 2403-1, 2403-2, 2403-3, 2503) from the metering element (199, 299, 799, 899, 1799, 2499-1, 2499-2, 2499-3), and comprising a first communication interface (104, 204, 404, 504, 704, 804, 1704, 2604) configured to output the metering data (103, 203, 303, 603, 703, 803, 1203, 1703, 1803, 1903, 2003, 2103, 2203, 2303, 2403-1, 2403-2, 2403-3, 2503) received from the metering element (199, 299, 799, 899, 1799, 2499-1, 2499-2, 2499-3);
wherein the at least one metering communication adapter (101, 201, 401, 701, 801, 1701, 2401-1, 2401-2, 2401-3, 2501-1, 2501-2, 2601) further comprises a first cryptographic module (215, 415, 715, 815, 1715) coupled between the local meter interface (102, 202, 402, 602, 702, 802, 1202, 1702, 2402-1, 2402-2, 2402-3, 2602-1, 2602-2) and the first communication interface (104, 204, 404, 504, 704, 804, 1704, 2604);
wherein the first cryptographic module (215, 415, 715, 815, 1715) is configured to cryptographically encrypt the received metering data (103, 203, 303, 603, 703, 803, 1203, 1703, 1803, 1903, 2003, 2103, 2203, 2303, 2403-1, 2403-2, 2403-3, 2503) and provide the cryptographically encrypted metering data (216, 316, 1716, 1816, 2516) to the first communication interface (104, 204, 404, 504, 704, 804, 1704, 2604) for transmission to a concentrator unit (107, 307, 1107, 1807, 1907, 2007, 2107, 2207, 2307, 2407); and
wherein the first cryptographic module (215, 415, 715, 815, 1715) further comprises a key memory (1780, 1880) that comprises a plurality of cryptographic keys (1781, 1881) with respective validity data (1782, 1882), wherein the first cryptographic module (215, 415, 715, 815, 1715) is configured to only use cryptographic keys (1781, 1881) with positively verified validity data (1782, 1882);
wherein the local meter interface (102, 202, 402, 602, 702, 802, 1202, 1702, 2402-1, 2402-2, 2402-3, 2602-1, 2602-2) comprises an optical, or wired or wireless interface; and
wherein the first communication interface (104, 204, 404, 504, 704, 804, 1704, 2604) comprises a long range radio interface.

2. Communication system (100, 2400, 2500 ) according to claim 1, further comprising a concentrator unit (107, 307, 1107, 1807, 1907, 2007, 2107, 2207, 2307, 2407) comprising a second communication interface (108, 308, 1108, 1308, 1808, 1908, 2008, 2108, 2208, 2308) configured to receive the metering data (103, 203, 303, 603, 703, 803, 1203, 1703, 1803, 1903, 2003, 2103, 2203, 2303, 2403-1, 2403-2, 2403-3, 2503) output by the at least one metering communication adapter (101, 201, 401, 701, 801, 1701, 2401-1, 2401-2, 2401-3, 2501-1, 2501-2, 2601), and comprising a local interface (109, 309, 1109, 1209, 1809, 1909, 2009, 2109, 2209, 2309-1, 2309-2) configured to output the received metering data (103, 203, 303, 603, 703, 803, 1203, 1703, 1803, 1903, 2003, 2103, 2203, 2303, 2403-1, 2403-2, 2403-3, 2503);
wherein the second communication interface (108, 308, 1108, 1308, 1808, 1908, 2008, 2108, 2208, 2308) comprises a long range radio interface.

3. Communication system (100, 2400, 2500 ) according to claim 1, wherein the local meter interface (102, 202, 402, 602, 702, 802, 1202, 1702, 2402-1, 2402-2, 2402-3, 2602-1, 2602-2) is configured to receive data packages (220, 1520, 1620) comprising meta data (221-1, 221-2, 1521-1, 1521-2, 1522-3, 1721-2, 1722-3) and measurement data (222-1, 222-2, 1522-1, 1522-2, 1522-3, 1722-2, 1722-3); and
wherein the first cryptographic module (215, 415, 715, 815, 1715) is configured to at least one of:
perform a single encryption of the measurement data (222-1, 222-2, 1522-1, 1522-2, 1522-3, 1722-2, 1722-3) and the meta data (221-1, 221-2, 1521-1, 1521-2, 1522-3, 1721-2, 1722-3); and
perform a first encryption of the measurement data (222-1, 222-2, 1522-1, 1522-2, 1522-3, 1722-2, 1722-3) , and a second encryption of the encrypted measurement data (222-1, 222-2, 1522-1, 1522-2, 1522-3, 1722-2, 1722-3) and the meta data (221-1, 221-2, 1521-1, 1521-2, 1522-3, 1721-2, 1722-3).

4. Communication system (100, 2400, 2500) according to any one of the preceding claims, wherein the first cryptographic module (215, 415, 715, 815, 1715) is further configured to perform a key exchange based on a symmetrical encryption method for exchanging encryption keys for an asymmetrical encryption method, and encrypt the received metering data (103, 203, 303, 603, 703, 803, 1203, 1703, 1803, 1903, 2003, 2103, 2203, 2303, 2403-1, 2403-2, 2403-3, 2503) with an asymmetrical encryption method based on the exchanged encryption keys.

5. Communication system (100, 2400, 2500) according to any one of the preceding claims, wherein at least one of the local meter interface (102, 202, 402, 602, 702, 802, 1202, 1702, 2402-1, 2402-2, 2402-3, 2602-1, 2602-2), the first communication interface (104, 204, 404, 504, 704, 804, 1704, 2604), comprise bi-directional interfaces;
wherein the first communication interface (104, 204, 404, 504, 704, 804, 1704, 2604) is configured to transmit received configuration and control data to the local meter interface (102, 202, 402, 602, 702, 802, 1202, 1702, 2402-1, 2402-2, 2402-3, 2602-1, 2602-2); and
wherein the local meter interface (102, 202, 402, 602, 702, 802, 1202, 1702, 2402-1, 2402-2, 2402-3, 2602-1, 2602-2) is configured to output the received configuration and control data.

6. Communication system (100, 2400, 2500) according to the preceding claims 1 and 5, wherein the first cryptographic module (215, 415, 715, 815, 1715) is configured to cryptographically decode the received configuration and control data and to provide the cryptographically decoded configuration and control data to the local meter interface (102, 202, 402, 602, 702, 802, 1202, 1702, 2402-1, 2402-2, 2402-3, 2602-1, 2602-2); and
wherein the local meter interface (102, 202, 402, 602, 702, 802, 1202, 1702, 2402-1, 2402-2, 2402-3, 2602-1, 2602-2) is configured to output the cryptographically decoded configuration and control data.

7. Communication system (100, 2400, 2500) according to any one of the preceding claims, wherein the at least one metering communication adapter (101, 201, 401, 701, 801, 1701, 2401-1, 2401-2, 2401-3, 2501-1, 2501-2, 2601) comprises:
a first module (430, 630, 930, 1030) comprising the local meter interface (102, 202, 402, 602, 702, 802, 1202, 1702, 2402-1, 2402-2, 2402-3, 2602-1, 2602-2) and a first coupling interface (431, 631) coupled to the local meter interface (102, 202, 402, 602, 702, 802, 1202, 1702, 2402-1, 2402-2, 2402-3, 2602-1, 2602-2); and
a second module (432, 532) comprising a second coupling interface (433, 533) coupled to the first communication interface (104, 204, 404, 504, 704, 804, 1704, 2604);
wherein the first coupling interface (431, 631) is configured to couple to the second coupling interface (433, 533).

8. Communication system (100, 2400, 2500) according to the preceding claims, wherein the first cryptographic module (215, 415, 715, 815, 1715) is arranged:
between the local meter interface (102, 202, 402, 602, 702, 802, 1202, 1702, 2402-1, 2402-2, 2402-3, 2602-1, 2602-2), and the first coupling interface (431, 631); or
between the second coupling interface (433, 533), and the first communication interface (104, 204, 404, 504, 704, 804, 1704, 2604).

9. Communication system (100, 2400, 2500) according to any one of the preceding claims, wherein in an initialization mode the at least one metering communication adapter (101, 201, 401, 701, 801, 1701, 2401-1, 2401-2, 2401-3, 2501-1, 2501-2, 2601) is configured to at least one of:
perform a registration procedure with the concentrator unit (107, 307, 1107, 1807, 1907, 2007, 2107, 2207, 2307, 2407);
automatically acquire an identification from the metering element (199, 299, 799, 899, 1799, 2499-1, 2499-2, 2499-3);
receive an identification of the metering element (199, 299, 799, 899, 1799, 2499-1, 2499-2, 2499-3) from the concentrator unit (107, 307, 1107, 1807, 1907, 2007, 2107, 2207, 2307, 2407); and
output the identification of the metering element (199, 299, 799, 899, 1799, 2499-1, 2499-2, 2499-3) and an internal identification of the at least one metering communication adapter (101, 201, 401, 701, 801, 1701, 2401-1, 2401-2, 2401-3, 2501-1, 2501-2, 2601).

10. Data communication method comprising:
receiving (S1401) metering data (103, 203, 303, 603, 703, 803, 1203, 1703, 1803, 1903, 2003, 2103, 2203, 2303, 2403-1, 2403-2, 2403-3, 2503) from at least one metering element (199, 299, 799, 899, 1799, 2499-1, 2499-2, 2499-3) via a local meter interface (102, 202, 402, 602, 702, 802, 1202, 1702, 2402-1, 2402-2, 2402-3, 2602-1, 2602-2);
cryptographically encrypting the received metering data (103, 203, 303, 603, 703, 803, 1203, 1703, 1803, 1903, 2003, 2103, 2203, 2303, 2403-1, 2403-2, 2403-3, 2503) and providing the cryptographically encrypted metering data (216, 316, 1716, 1816, 2516) to the first communication interface (104, 204, 404, 504, 704, 804, 1704, 2604) for transmission to a second communication interface (108, 308, 1108, 1308, 1808, 1908, 2008, 2108, 2208, 2308), wherein encrypting is performed with one of a plurality of cryptographic keys (1781, 1881) with positively verified validity data (1782, 1882);
outputting (S1402) the metering data (103, 203, 303, 603, 703, 803, 1203, 1703, 1803, 1903, 2003, 2103, 2203, 2303, 2403-1, 2403-2, 2403-3, 2503) received from the metering element (199, 299, 799, 899, 1799, 2499-1, 2499-2, 2499-3) via a first communication interface (104, 204, 404, 504, 704, 804, 1704, 2604).

11. Data communication method according to claim 10, wherein the local meter interface (102, 202, 402, 602, 702, 802, 1202, 1702, 2402-1, 2402-2, 2402-3, 2602-1, 2602-2) comprises at least one of:
an optical interface;
an infrared optical interface;
a character-based optical interface;
a reed-switch-based interface;
a wired interface; and
a wireless interface;
and/or wherein the first communication interface (104, 204, 404, 504, 704, 804, 1704, 2604) comprises at least one of:
a wired data interface;
a wireless data interface;
a LoRaWAN interface;
a mioty interface;
a wireless sub-GHz interface;
a WIFI interface; and
a Bluetooth interface.

12. Data communication method according any one of claims 10 and 11, wherein the metering data (103, 203, 303, 603, 703, 803, 1203, 1703, 1803, 1903, 2003, 2103, 2203, 2303, 2403-1, 2403-2, 2403-3, 2503) comprises data packages (220, 1520, 1620) comprising meta data (221-1, 221-2, 1521-1, 1521-2, 1522-3, 1721-2, 1722-3) and measurement data (222-1, 222-2, 1522-1, 1522-2, 1522-3, 1722-2, 1722-3);
the method further comprising at least one of:
performing a single encryption of the measurement data (222-1, 222-2, 1522-1, 1522-2, 1522-3, 1722-2, 1722-3) and the meta data (221-1, 221-2, 1521-1, 1521-2, 1522-3, 1721-2, 1722-3); and
performing a first encryption of the measurement data (222-1, 222-2, 1522-1, 1522-2, 1522-3, 1722-2, 1722-3), and a second encryption of the encrypted measurement data (222-1, 222-2, 1522-1, 1522-2, 1522-3, 1722-2, 1722-3) and the meta data (221-1, 221-2, 1521-1, 1521-2, 1522-3, 1721-2, 1722-3).

13. Data communication method according to any one of the preceding method-based claims, further comprising cryptographically decoding received configuration and control data and providing the cryptographically decoded configuration and control data to the local meter interface (102, 202, 402, 602, 702, 802, 1202, 1702, 2402-1, 2402-2, 2402-3, 2602-1, 2602-2) for outputting the decoded configuration and control data.

14. Data communication method according to any one of the preceding method-based claims, further comprising in an initialization mode of at least one metering communication adapter (101, 201, 401, 701, 801, 1701, 2401-1, 2401-2, 2401-3, 2501-1, 2501-2, 2601):
performing a registration procedure of the at least one metering communication adapter (101, 201, 401, 701, 801, 1701, 2401-1, 2401-2, 2401-3, 2501-1, 2501-2, 2601) with the concentrator unit (107, 307, 1107, 1807, 1907, 2007, 2107, 2207, 2307, 2407);
automatically acquiring an identification from the metering element (199, 299, 799, 899, 1799, 2499-1, 2499-2, 2499-3) in the at least one metering communication adapter (101, 201, 401, 701, 801, 1701, 2401-1, 2401-2, 2401-3, 2501-1, 2501-2, 2601);
receiving an identification of the metering element (199, 299, 799, 899, 1799, 2499-1, 2499-2, 2499-3) from the concentrator unit (107, 307, 1107, 1807, 1907, 2007, 2107, 2207, 2307, 2407) with the at least one metering communication adapter (101, 201, 401, 701, 801, 1701, 2401-1, 2401-2, 2401-3, 2501-1, 2501-2, 2601);
outputting the identification of the metering element (199, 299, 799, 899, 1799, 2499-1, 2499-2, 2499-3) and an internal identification of the at least one metering communication adapter (101, 201, 401, 701, 801, 1701, 2401-1, 2401-2, 2401-3, 2501-1, 2501-2, 2601) with the at least one metering communication adapter (101, 201, 401, 701, 801, 1701, 2401-1, 2401-2, 2401-3, 2501-1, 2501-2, 2601).

15. Non-transitory data carrier comprising instructions that when executed by a processor, especially a processor of a metering communication adapter (101, 201, 401, 701, 801, 1701, 2401-1, 2401-2, 2401-3, 2501-1, 2501-2, 2601) in a communication system (100, 2400, 2500) according to any one of claims 1 to 23, cause the processor to perform the functions of the metering communication adapter (101, 201, 401, 701, 801, 1701, 2401-1, 2401-2, 2401-3, 2501-1, 2501-2, 2601).
